(19) Europäisches Patentamt
European Patent Office
Office européen des brevets

(11) EP 4 269 492 A1

(12) EUROPEAN PATENT APPLICATION
published in accordance with Art. 153(4) EPC

(43) Date of publication:
**01.11.2023 Bulletin 2023/44**

(21) Application number: **21910936.0**

(22) Date of filing: **23.12.2021**

(51) International Patent Classification (IPC):
***C08K 5/3445*** (2006.01) ***C08L 21/00*** (2006.01)
***C08L 23/06*** (2006.01) ***C08L 101/00*** (2006.01)
***C09K 3/00*** (2006.01) ***C08J 9/04*** (2006.01)
***C08J 9/06*** (2006.01)

(52) Cooperative Patent Classification (CPC):
**C08J 9/04; C08J 9/06; C08K 5/3445; C08L 21/00; C08L 23/06; C08L 101/00; C09K 3/00**

(86) International application number:
**PCT/JP2021/047786**

(87) International publication number:
**WO 2022/138796 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.12.2020 JP 2020216789**
**27.08.2021 JP 2021138729**

(71) Applicant: **Otsuka Chemical Co., Ltd.**
**Osaka-shi, Osaka 540-0021 (JP)**

(72) Inventor: **AOYAGI, Seiichi**
**Tokushima-shi, Tokushima 771-0193 (JP)**

(74) Representative: **Meissner Bolte Partnerschaft mbB**
**Widenmayerstrasse 47**
**80538 München (DE)**

# (54) EXPANSION RATIO IMPROVER FOR POLYMER MATERIALS, FOAMING AGENT COMPOSITION FOR POLYMER MATERIALS, AND RESIN COMPOSITION

(57) An object of the present invention is to provide an expansion ratio improver for a polymer material that can impart an excellent expansion ratio to polymer materials. Another object of the present invention is to provide a resin composition for obtaining a foam having a high expansion ratio and fine (dense) cells. An expansion ratio improver for a polymer material, comprising at least one member selected from the group consisting of a pyrazolone-based compound and a salt of the compound. A resin composition comprising component (a): polyethylene, component (b): a chemical foaming agent, and component (c): a pyrazolone-based compound, the resin composition containing 0.1 parts by mass to 50 parts by mass of component (b) and 0.1 parts by mass to 50 parts by mass of component (c) based on 100 parts by mass of component (a).

EP 4 269 492 A1

## Description

Technical Field

The present invention relates to an expansion ratio improver for polymer materials, and a foaming agent composition for polymer materials.
The present invention also relates to a resin composition.

Background Art

Foams are widely used for tire parts, automobile exterior and interior parts, and home appliance parts because of their excellent lightweight and thermal insulation properties.
Such foams can generally be produced by adding a foaming agent to polymer materials such as resin and rubber. In addition to further improvement of foam performance such as lightweight and thermal insulation properties, economic constraints etc. have required reduction in the use of foaming agents. There is a high demand for foams having an excellent expansion ratio.
As a method for producing a foam having an excellent expansion ratio, for example, PTL 1 discloses combined use of a chemical foaming agent and microcapsules with a specific average particle size.
Further, the applicant has conventionally developed, for example, a method for producing an insect-repellent resin foam, comprising incorporating an insect repellent in expandable beads and then molding the beads by a bead expansion process (PTL 2), and a ceiling material for an automobile comprising a foam layer, wherein the foam layer contains at least one member selected from a hydrazide compound, an azole compound, or an azine compound (PTL 3).

Citation List

Patent Literature

PTL 1: JP2007-246578A
PTL 2: JPS61-44934A
PTL 3: JP2000-6730A

Summary of Invention

Technical Problem

In view of the above circumstances, a first object of the present invention is to provide an expansion ratio improver for polymer materials that can impart an excellent expansion ratio to polymer materials.
Further, a second object of the present invention is to provide a resin composition for obtaining a foam having a high expansion ratio and fine (dense) cells.

Solution to Problem

First Invention

As a result of extensive research to achieve the above objects, the present inventor primarily found that specific pyrazolone-based compounds can significantly improve the expansion ratio of polymer materials.
Upon further research based on this finding, the present inventor has completed the first invention.
The first invention provides an expansion ratio improver for polymer materials, and a foaming agent composition for polymer materials, described below.

Item 1. An expansion ratio improver for a polymer material, comprising at least one member selected from the group consisting of a compound represented by the following formula (1) and a salt of the compound:

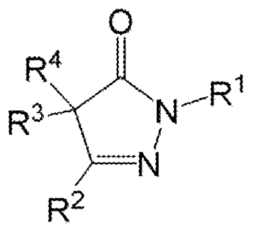

(1)

wherein in formula (1), $R^1$, $R^2$, $R^3$, and $R^4$ are the same or different and each represents a hydrogen atom, an alkyl group, an aralkyl group, or an aryl group; and each of these groups optionally has one or more substituents.

Item 2. The expansion ratio improver for a polymer material according to Item 1, wherein the polymer material is rubber.

Item 3. The expansion ratio improver for a polymer material according to Item 2, wherein the rubber is at least one member selected from the group consisting of diene rubber and non-diene rubber.

Item 4. The expansion ratio improver for a polymer material according to Item 1, wherein the polymer material is a resin.

Item 5. The expansion ratio improver for a polymer material according to Item 4, wherein the resin is at least one member selected from the group consisting of thermosetting resins and thermoplastic resins.

Item 6. The expansion ratio improver for a polymer material according to any one of Items 1 to 5, wherein in the compound represented by formula (1), $R^1$, $R^3$, and $R^4$ are hydrogen atoms, and $R^2$ is a methyl group.

Item 7. A foaming agent composition for a polymer material, comprising the expansion ratio improver for a polymer material according to any one of Items 1 to 6 and a chemical foaming agent.

Item 8. The foaming agent composition for a polymer material according to Item 7, wherein the chemical foaming agent is at least one member selected from the group consisting of azodicarbonamide, N,N'-dinitrosopentanemethylenetetramine, p,p'-oxybisbenzenesulfonyl hydrazide, para-toluenesulfonyl hydrazide, p-toluenesulfonyl semicarbazide, diazoaminobenzene, hydrazodicarbonamide, barium azodicarboxylate, azobisisobutyronitrile, monosodium citrate, sodium bicarbonate, ammonium hydrogen carbonate, sodium carbonate, ammonium carbonate, aluminum acetate, ammonium nitrite, and sodium borohydride.

Second Invention

As a result of extensive research to achieve the above objects, the present inventor secondarily found that a foam having a high expansion ratio and fine (dense) cells can be obtained by adding a pyrazolone-based compound to a resin composition comprising polyethylene and a chemical foaming agent, and foaming the resin composition.

Upon further research based on this finding, the present inventor has completed the second invention.

Specifically, the present invention provides a resin composition described below.

Item 1. A resin composition comprising:

component (a): polyethylene,
component (b): a chemical foaming agent, and
component (c): a compound represented by the following formula (1) or a salt thereof:

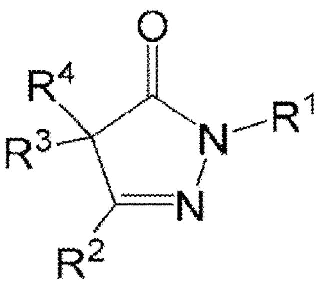

(1)

wherein $R^1$ represents a hydrogen atom, an alkyl group, or an aralkyl group; $R^2$, $R^3$, and $R^4$ are the same or different and each represents a hydrogen atom, an alkyl group, an aralkyl group, or an aryl group; and each of these groups optionally has one or more substituents,
the resin composition containing

0.1 parts by mass to 50 parts by mass of component (b) and
0.1 parts by mass to 50 parts by mass of component (c) based on 100 parts by mass of component (a).

Item 2. The resin composition according to Item 1, wherein component (a) is low-density polyethylene (LDPE).
Item 3. The resin composition according to Item 1 or 2, wherein component (b) is an organic chemical foaming agent or an inorganic chemical foaming agent.
Item 4. The resin composition according to Item 3, wherein the organic chemical foaming agent is an azo-based chemical foaming agent.
Item 5. The resin composition according to Item 3, wherein the inorganic chemical foaming agent is sodium bicarbonate.
Item 6. The resin composition according to any one of Items 1 to 5, wherein in the compound represented by formula (1) or a salt thereof, $R^1$, $R^3$, and $R^4$ are hydrogen atoms, and $R^2$ is a methyl group.
Item 7. A foam foamed from the resin composition according to any one of Items 1 to 6.
Item 8. A thermal insulation material, a thermal insulation material, a curing material, a joint material, a gap-filling material, a covering material, a waterproof material, a sound insulator, a floater, a cushioning material, a shock absorbing material, a rug core material, or a toy, all of which are produced by using the resin composition according to any one of Items 1 to 6 or the foam according to Item 7.

Advantageous Effects of Invention

First, the expansion ratio improver for polymer materials and the foaming agent composition for polymer materials of the present invention can impart an excellent expansion ratio to polymer materials.
Secondarily, the resin composition of the present invention can be foamed to thereby obtain a foam having a high expansion ratio and fine (dense) cells.

Description of Embodiments

The first and second inventions are described in detail below.
In the present specification, the terms "comprise" and "contain" are concepts including all of "comprise," "contain," "consist essentially of," and "consist of."
In the present specification, a numerical range indicated by "A to B" means A or more and B or less.

First Invention

1. Expansion Ratio Improver for Polymer Materials

The expansion ratio improver for polymer materials of the present invention comprises at least one compound selected from the group consisting of a compound represented by formula (1) and a salt of the compound (hereinafter the compound or a salt thereof is also collectively referred to simply as "compound (1)"):

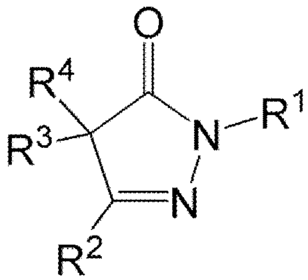

(1)

wherein $R^1$, $R^2$, $R^3$, and $R^4$ are the same or different and each represents a hydrogen atom, an alkyl group, an aralkyl group, or an aryl group; and each of these groups optionally has one or more substituents.
The "alkyl group" in compound (1) is not particularly limited, and examples include linear, branched, or cyclic alkyl groups. Specific examples include
$C_{1-4}$ linear or branched alkyl groups, such as methyl, ethyl, n-propyl, isopropyl, n-butyl, isobutyl, s-butyl, and t-butyl;
$C_{5-18}$ linear or branched alkyl groups, such as 1-ethylpropyl, n-pentyl, isopentyl, neopentyl, n-hexyl, isohexyl, 3-methylpentyl, n-heptyl, n-octyl, n-nonyl, n-decyl, n-undecyl, n-dodecyl, 5-propylnonyl, n-tridecyl, n-tetradecyl, n-pentadecyl, hexadecyl, heptadecyl, and octadecyl;

$C_{3-8}$ cyclic alkyl groups, such as cyclopropyl, cyclobutyl, cyclopentyl, cyclohexyl, cycloheptyl, and cyclooctyl; and the like.

The "aralkyl group" in compound (1) is not particularly limited, and examples include benzyl, phenethyl, trityl, 1-naphthylmethyl, 2-(1-naphthyl)ethyl, and 2-(2-naphthyl)ethyl groups.

The "aryl group" in compound (1) is not particularly limited, and examples include phenyl, biphenyl, naphthyl, dihydroindenyl, and 9H-fluorenyl groups.

These alkyl, aralkyl, and aryl groups optionally have one or more substituents at any replaceable position. Such substituents are not particularly limited, and examples include halogen, amino, aminoalkyl, alkoxycarbonyl, acyl, acyloxy, amide, carboxyl, carboxyalkyl, formyl, nitrile, nitro, alkyl, hydroxyalkyl, hydroxyl, alkoxy, aryl, aryloxy, thiol, alkylthio, and arylthio groups. The number of substituents is preferably 1 to 5, and more preferably 1 to 3.

Examples of the "halogen atom" as a substituent include fluorine, chlorine, bromine, iodine, and astatine atoms; and preferably fluorine, chlorine, bromine, and iodine atoms.

Examples of the "amino group" as a substituent include not only an amino group represented by $-NH_2$, but also linear or branched monoalkyl amino groups having about 1 to 6 carbon atoms, such as methylamino, ethylamino, n-propylamino, isopropylamino, n-butylamino, isobutylamino, s-butylamino, t-butylamino, 1-ethylpropylamino, n-pentylamino, neopentylamino, n-hexylamino, isohexylamino, and 3-methylpentylamino groups; and substituted amino groups, such as dialkyl amino groups having two linear or branched alkyl groups having about 1 or 2 carbon atoms, such as dimethylamino, ethylmethylamino, and diethylamino groups.

The "aminoalkyl group" as a substituent is not particularly limited, and examples include aminoalkyl groups, monoalkyl-substituted aminoalkyl groups, dialkyl-substituted aminoalkyl groups, which have about 1 to 7 carbon atoms, such as aminomethyl, methylamino methyl, ethylamino methyl, dimethylamino methyl, ethyl methylamino methyl, diethylamino methyl, 2-aminoethyl, 2-(methylamino)ethyl, 2-(ethylamino)ethyl, 2-(dimethylamino)ethyl, 2-(ethylmethylamino)ethyl, 2-(diethylamino)ethyl, 3-aminopropyl, 3-(methylamino)propyl, 3-(ethylamino)propyl, 3-(dimethylamino)propyl, 3-(ethylmethylamino)propyl, and 3-(diethylamino)propyl groups; and the like.

The "alkoxycarbonyl group" as a substituent is not particularly limited, and examples include $C_{1-4}$ linear or branched alkoxycarbonyl groups, such as methoxycarbonyl and ethoxycarbonyl groups.

The "acyl group" as a substituent is not particularly limited, and examples include $C_{1-4}$ linear or branched alkylcarbonyl groups, such as acetyl, propionyl, and pivaloyl groups.

The "acyloxy group" as a substituent is not particularly limited, and examples include $C_{1-4}$ linear or branched acyloxy groups, such as acetyloxy, propionyloxy, and n-butyryloxy groups.

The "amide group" as a substituent is not particularly limited, and examples include carboxylic acid amide groups, such as acetamide and benzamide groups; thioamide groups, such as thioacetamide and thiobenzamide groups; N-substituted amide groups, such as N-methylacetamide and N-benzylacetamide groups; and the like.

The "carboxyalkyl group" as a substituent is not particularly limited, and examples include carboxyalkyl groups, such as carboxymethyl, carboxyethyl, carboxy-n-propyl, carboxy-n-butyl, carboxy-n-pentyl, and carboxy-n-hexyl groups.

The "hydroxyalkyl group" as a substituent is not particularly limited, and examples include hydroxyalkyl groups, such as hydroxymethyl, hydroxyethyl, hydroxy-n-propyl, and hydroxy-n-butyl groups.

The "alkoxy group" as a substituent is not particularly limited, and examples include linear, branched, or cyclic alkoxy groups. Specific examples include linear or branched alkoxy groups, such as methoxy, ethoxy, n-propoxy, isopropoxy, n-butoxy, t-butoxy, n-pentyloxy, neopentyloxy, and n-hexyloxy groups; cyclic alkoxy groups, such as cyclopropyloxy, cyclobutyloxy, cyclopentyloxy, cyclohexyloxy, cycloheptyloxy, and cyclooctyloxy groups; and the like.

The "aryloxy group" as a substituent is not particularly limited, and examples include phenoxy, biphenyloxy, and naphthoxy groups.

The "alkylthio group" as a substituent is not particularly limited, and examples include methylthio, ethylthio, and n-propylthio groups.

The "arylthio group" as a substituent is not particularly limited, and examples include phenylthio, naphthylthio, and biphenylthio groups.

The compound represented by formula (1) is preferably a compound wherein $R^1$ is a hydrogen atom.

Moreover, the compound represented by formula (1) is preferably a compound wherein $R^2$ is a hydrogen atom, a $C_{1-4}$ linear or branched alkyl group, an aralkyl group, or an aryl group; more preferably a compound wherein $R^2$ is a hydrogen atom or a $C_{1-4}$ linear or branched alkyl group; and even more preferably a compound wherein $R^2$ is a methyl group.

Further, the compound represented by formula (1) is preferably a compound wherein at least one of $R^3$ and $R^4$ is a hydrogen atom, and more preferably a compound wherein $R^3$ and $R^4$ are both hydrogen atoms.

Among the above, the compound represented by formula (1) is preferably a compound wherein $R^1$ is a hydrogen atom, $R^2$ is a hydrogen atom, a $C_{1-4}$ linear or branched alkyl group, an aralkyl group, or an aryl group, and $R^3$ and $R^4$ are both hydrogen atoms; more preferably a compound wherein $R^1$ is a hydrogen atom, $R^2$ is a hydrogen atom or a $C_{1-4}$

linear or branched alkyl group, and $R^3$ and $R^4$ are both hydrogen atoms; and particularly preferably a compound wherein $R^1$ is a hydrogen atom, $R^2$ is a methyl group, and $R^3$ and $R^4$ are both hydrogen atoms.

Examples of the compound represented by formula (1) include 5-pyrazolone, 3-methyl-5-pyrazolone, 3-(naphthalen-2-yl)-1H-pyrazol-5(4H)-one, 3-phenyl-1H-pyrazol-5(4H)-one, 3-propyl-1H-pyrazol-5(4H)-one, 3-undecyl-1H-pyrazol-5(4H)-one, 4-(2-hydroxyethyl)-3-methyl-1H-pyrazol-5(4H)-one, 4-benzyl-3-methyl-1H-pyrazol-5(4H)-one, 5-methyl-2-(4-nitrophenyl)-1H-pyrazol-3(2H)-one, 5-methyl-2-phenyl-2,4-dihydro-3H-pyrazol-3-one, 1,3-diphenyl-1H-pyrazol-5(4H)-one, and the like.

More preferred among these as the compound represented by formula (1) are 5-pyrazolone, 3-methyl-5-pyrazolone, 3-(naphthalen-2-yl)-1H-pyrazol-5(4H)-one, 3-phenyl-1H-pyrazol-5(4H)-one, and 3-propyl-1H-pyrazol-5(4H)-one; and particularly preferred is 3-methyl-5-pyrazolone.

The expansion ratio improver for polymer materials of the present invention may contain the above compounds singly or in combination of two or more.

Some of the compounds represented by formula (1) generate tautomers. Chemical equilibrium of tautomers can be achieved if tautomerization is possible (e.g., in a solution). Compounds (1) can be present as, for example, tautomers represented by formulas (2) to (7).

The compound of formula (1) wherein $R^1$ and $R^3$ are hydrogen atoms (compound (1)-A) has tautomers represented by the following formulas (2) to (4):

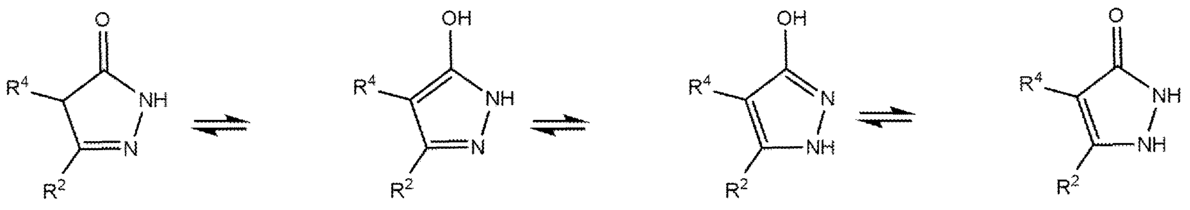

(1)-A (2) (3) (4)

wherein $R^2$ and $R^4$ are as defined above.

The compound of formula (1) wherein $R^3$ is a hydrogen atom (compound (1)-B) has tautomers represented by the following formulas (5) and (6):

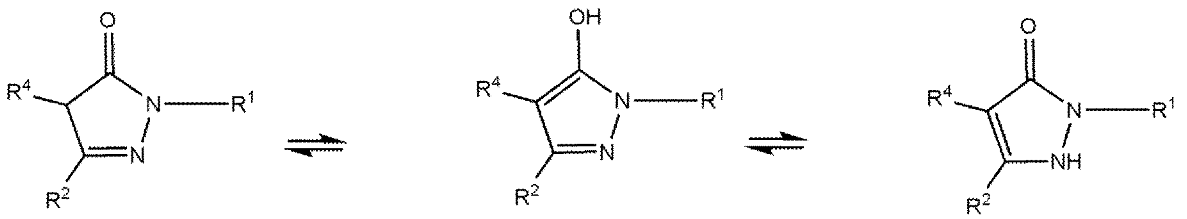

(1)-B (5) (6)

wherein $R^1$, $R^2$, and $R^4$ are as defined above.

The compound of formula (1) wherein $R^1$ is a hydrogen atom (compound (1)-C) has a tautomer represented by the following formula (7):

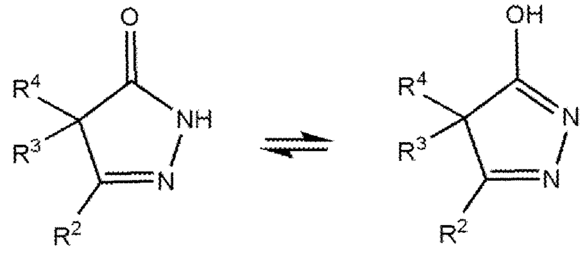

(1)-C (7)

wherein $R^2$, $R^3$, and $R^4$ are as defined above.

The tautomers represented by formulas (2) to (7) and compound (1) reach an equilibrium state in which both isomers coexist. Therefore, unless otherwise specified, in the present specification, all the tautomers of compound (1) fall within the scope of the present invention.

The salts of the compound represented by formula (1) are not particularly limited and include various types of salts. Examples of such salts include inorganic acid salts, such as hydrochloride, sulfate, and nitrate; organic acid salts, such as acetate and methanesulfonate; alkali metal salts, such as sodium salt and potassium salt; alkaline earth metal salts, such as magnesium salt and calcium salt; ammonium salts, such as dimethylammonium and triethylammonium; and the like.

The expansion ratio improver for polymer materials of the present invention may consist of compound (1), or preferably contains other substances within a range that does not impair its purpose and effect.

The amount of the expansion ratio improver for polymer materials used is preferably 0.1 to 100 parts by mass, more preferably 0.5 to 60 parts by mass, and even more preferably 1 to 50 parts by mass, based on 100 parts by mass of a polymer material, described later.

1.2. Polymer Material

Polymer materials that can be applied to the expansion ratio improver for polymer materials of the present invention are not particularly limited, and known polymer materials can be widely used. Examples include rubber, resins, thermosetting elastomers, thermoplastic elastomers, and the like.

The rubber is not particularly limited, and examples include diene rubbers, non-diene rubbers, and mixtures of diene rubbers and non-diene rubbers.

Examples of diene rubbers include natural rubber, styrene-butadiene copolymer rubber (SBR), butadiene rubber (BR), isoprene rubber (IR), styrene-isoprene-butadiene rubber (SIBR), nitrile rubber (NBR), chloroprene rubber (CR), a styrene-isoprene-styrene triblock copolymer (SIS), a styrene-butadiene-styrene triblock copolymer (SBS), and modified diene rubbers thereof. Preferred among these are natural rubber, butadiene rubber, and styrene-butadiene copolymer rubber.

Examples of natural rubbers include natural rubber latex, technically specified rubber (TSR), smoked sheet (RSS), gutta-percha, natural rubber from *Eucommia ulmoides*, natural rubber from guayule, natural rubber from Russian dandelion, and the like. Further, it is also preferable to use modified natural rubbers obtained by modifying these natural rubbers, such as epoxidized natural rubber, methacrylic acid-modified natural rubber, halogen-modified natural rubber, deproteinized natural rubber, maleic acid-modified natural rubber, sulfonic acid-modified natural rubber, and styrene-modified natural rubber.

Modified diene rubbers include diene rubbers modified by main-chain modification, single-end modification, both-end modification, or the like. Modified functional groups of modified diene rubbers include epoxide, amino, alkoxysilyl, hydroxyl, and other various functional groups. Modified diene rubbers may contain one or two or more of these functional groups.

The method for producing diene rubber is not particularly limited, and examples include emulsion polymerization, solution polymerization, radical polymerization, anionic polymerization, cationic polymerization, and the like. There is no particular restriction on the glass transition point of synthetic diene rubber.

Examples of non-diene rubbers include butyl rubber, ethylene-propylene rubber (EPM), ethylene-propylene-diene terpolymer rubber (EPDM), urethane rubber (U), a propylene hexafluoride-vinylidene fluoride copolymer (FKM), a tetrafluoroethylene-propylene copolymer (FEPM), a tetrafluoroethylene-perfluorovinyl ether copolymer (FFKM), methyl silicone rubber (MQ), vinyl methyl silicone rubber (VMQ), phenyl methyl silicone rubber (PMQ), acrylic rubber (ACM), polysulfide rubber (T), epichlorohydrin rubber (CO, ECO), and modified non-diene rubbers thereof. Preferred among these are butyl rubber and ethylene-propylene-diene terpolymer rubber (EPDM).

Modified non-diene rubbers include non-diene rubbers modified by main-chain modification, single-end modification, both-end modification, or the like. Modified functional groups of modified non-diene rubbers include epoxide, amino, alkoxysilyl, hydroxyl, and other various functional groups. Modified synthetic non-diene rubbers may contain one or two or more of these functional groups.

The method for producing non-diene rubber is not particularly limited, and examples include emulsion polymerization, solution polymerization, radical polymerization, anionic polymerization, cationic polymerization, and the like. There is no particular restriction on the glass transition point of synthetic non-diene rubber.

The ratio of cis/trans/vinyl at the double bond of natural rubber and diene rubber is not particularly limited, and any ratio can be suitably used. Further, the number average molecular weight and molecular weight distribution of diene rubber are also not particularly limited. The number average molecular weight is preferably 500 to 3000000, and the molecular weight distribution is preferably 1.5 to 15. As the non-diene rubber, known rubbers can be widely used.

The rubbers can be used singly or as a mixture (blend) of two or more.

Among the rubbers, it is preferable to use natural rubber, isoprene rubber (IR), butadiene rubber (BR), styrene-butadiene copolymer rubber (SBR), or nitrile rubber (NBR).

The resin is not particularly limited, and examples include thermosetting resins and thermoplastic resins.

Examples of thermosetting resins include polyurethane, epoxy resin, phenolic resin, melamine resin, urea resin, unsaturated polyester resin, alkyd resin, thermosetting polyimide, and the like.

Examples of thermoplastic resins include polyethylene, polypropylene, polyvinyl chloride, an ethylene-vinyl acetate copolymer, polystyrene, polyvinyl acetate, polyurethane, polytetrafluoroethylene, acrylonitrile-butadiene-styrene resin, acrylonitrile-styrene resin, acrylic resin, polyvinyl alcohol, and the like.

Preferred among these resins are polyethylene, polypropylene, polyvinyl chloride, an ethylene-vinyl acetate copolymer, and polyurethane; and more preferred is polyethylene.

1.3. Chemical Foaming Agent

The expansion ratio improver for polymer materials of the present invention, when used in combination with a chemical foaming agent, can impart an excellent expansion ratio to polymer materials.

The chemical foaming agent is not particularly limited, and known chemical foaming agents can be widely used. Examples include organic chemical foaming agents, such as azodicarbonamide, N,N'-dinitrosopentanemethylenetetramine, p,p'-oxybisbenzenesulfonyl hydrazide, para-toluenesulfonyl hydrazide, p-toluenesulfonyl semicarbazide, diazoaminobenzene, hydrazodicarbonamide, barium azodicarboxylate, azobisisobutyronitrile, monosodium citrate, and other organic acids and metal salts thereof; and inorganic chemical foaming agents, such as sodium bicarbonate, ammonium hydrogen carbonate, sodium carbonate, ammonium carbonate, aluminum acetate, ammonium nitrite, and sodium borohydride.

These chemical foaming agents can be used singly or as a mixture (blend) of two or more.

Preferred among the above chemical foaming agents is azodicarbonamide, p,p'-oxybisbenzenesulfonyl hydrazide, or sodium bicarbonate.

The surface of these foaming agents may be chemically treated. Such foaming agents are excellent in terms of prevention of their solidification, dispersibility, dust control, workability, storage stability, etc. Further, compositions and foams obtained by using such foaming agents are excellent in terms of improvement of mechanical properties, miniaturization of cells, etc.

The median diameter of azodicarbonamide (ADCA) is preferably about 1 μm to 40 μm, more preferably 2 μm to 25 pm, and even more preferably 4 μm to 20 um. Due to the use of azodicarbonamide with a median diameter of about 1 μm to 40 μm in the resin composition of the present invention, a foam having a high expansion ratio and fine (dense) cells can be obtained.

When the expansion ratio improver for polymer materials of the present invention is used in combination with a chemical foaming agent, the chemical foaming agent is preferably used in an amount of 10 to 10000 parts by mass, more preferably 50 to 5000 parts by mass, even more preferably 100 to 4000 parts by mass, and particularly preferably 100 to 3000 parts by mass, based on 100 parts by mass of compound (1) in the expansion ratio improver for polymer materials of the present invention.

When the polymer material expansion ratio improver of the present invention is used in combination with a chemical foaming agent, the amount of compound (1) used is preferably 0.1 to 100 parts by mass, more preferably 0.5 to 50 parts by mass, even more preferably 0.8 to 40 parts by mass, and particularly preferably 1 to 30 parts by mass, based on 100 parts by mass of the total mass of compound (1) in the polymer material expansion ratio improver of the present invention and the chemical foaming agent.

1.4. Foaming Aid

The expansion ratio improver for polymer materials of the present invention is preferably used in combination with a foaming aid.

The foaming aid is not particularly limited, and conventionally used foaming aids can be used. Examples include urea compounds; zinc compounds, such as zinc oxide, zinc stearate, zinc benzenesulfinate, zinc toluenesulfonate, zinc trifluoromethanesulfonate, and zinc carbonate; lead compounds, such as lead dioxide and tribasic lead; and the like. Among these, it is preferable to use zinc oxide, zinc stearate, zinc benzenesulfinate, or zinc carbonate.

The above foaming aids can be used singly or as a mixture (blend) of two or more.

When the expansion ratio improver for polymer materials of the present invention is used in combination with a foaming aid, the amount thereof is preferably 0.1 to 1000 parts by mass, more preferably 0.5 to 500 parts by mass, even more preferably 1 to 200 parts by mass, and particularly preferably 5 to 100 parts by mass, based on 100 parts by mass of compound (1) in the expansion ratio improver for polymer materials of the present invention.

When the expansion ratio improver for polymer materials of the present invention is used in combination with a foaming aid, the ratio of compound (1) is preferably 0.1 to 100 parts by mass, more preferably 0.5 to 80 parts by mass, even more preferably 1 to 70 parts by mass, and particularly preferably 5 to 50 parts by mass, based on the total mass of compound (1) in the expansion ratio improver for polymer materials of the present invention and the foaming aid, which is taken as 100 parts by mass.

1.5. Other Ingredients

The expansion ratio improver for polymer materials of the present invention may contain, in addition to compound (1), various ingredients within the scope that does not impair its purpose and effect. Examples include carbon black, inorganic fillers, antiaging agents, antiozonants, softeners, processing aids, waxes, resins, oils, $C_{8-30}$ fatty acids such as stearic acid, fatty acid metal salts, zinc oxide (ZnO), vulcanization accelerators, vulcanization retarders, vulcanizing agents (sulfur), crosslinking aids, crosslinking agents, pigments, dyes, tackifiers, cell nucleating agents, malodor adsorbents, ultraviolet absorbers, light stabilizers, antioxidants, light-shielding agents, metal deactivators, quenching agents, antifogging agents, antiseptic agents, antibacterial agents, deodorants, plasticizers, antistatic agents, surfactants, polymerization inhibitors, sensitizers, curing accelerators, diluents, fluidity modifiers, leveling agents, pressure-sensitive adhesives, adhesives, unguents, mold release agents, lubricants, solid lubricants, tougheners, compatibilizing agents, conductive agents, anti-blocking agents, anti-tracking agents, luminescent agents, flame retardants, dispersants, and the like, which can be appropriately selected and blended within a range that does not impair the objects of the present invention. Commercially available products can be suitably used as these ingredients.

When the expansion ratio improver for polymer materials of the present invention is applied to a rubber component, carbon black can be added. Examples of carbon black include, but are not particularly limited to, commercially available carbon black, carbon-silica dual phase filler.

Specific example of carbon black include high-, middle-, or low-structure SAF, ISAF, IISAF, N110, N134, N220, N234, N330, N339, N375, N550, HAF, FEF, GPF, and SRF grade carbon black. Preferred carbon black among these is SAF, ISAF, IISAF, N134, N234, N330, N339, N375, HAF, or FEF grade carbon black.

The DBP absorption of carbon black is not particularly limited, and is preferably 60 to 200 $cm^3$/100 g, more preferably 70 to 180 $cm^3$/100 g, and particularly preferably 80 to 160 $cm^3$/100 g.

Further, the nitrogen adsorption specific surface area (N2SA, measured according to JISK6217-2: 2001) of carbon black is preferably 30 to 200 $m^2$/g, more preferably 40 to 180 $m^2$/g, and particularly preferably 50 to 160 $m^2$/g.

When the expansion ratio improver for polymer materials of the present invention is applied to a rubber component, an inorganic filler can be added. The inorganic filler is not particularly limited as long as it is a generally used inorganic compound. Examples of usable inorganic compounds include silica; alumina ($Al_2O_3$), such as $\gamma$-alumina and $\alpha$-alumina; alumina monohydrate ($Al_2O_3 \cdot H_2O$), such as boehmite and diaspore; aluminum hydroxide [$Al(OH)_3$], such as gibbsite and bayerite; aluminum carbonate [$Al_2(CO_3)_3$], magnesium hydroxide [$Mg(OH)_2$], magnesium oxide (MgO), magnesium carbonate ($MgCO_3$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide (CaO), calcium hydroxide [$Ca(OH)_2$], magnesium aluminum oxide ($MgO \cdot Al_2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate ($Al_2SiO_5$, $Al_4 \cdot 3SiO_4 \cdot 5H_2O$, etc.), magnesium silicate ($Mg_2SiO_4$, $MgSiO_3$, etc.), calcium silicate ($Ca_2 \cdot SiO_4$, etc.), aluminum calcium silicate ($Al_2O_3 \cdot CaO \cdot 2SiO_2$, etc.), magnesium calcium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$], zinc acrylate, zinc methacrylate, crystalline aluminosilicates that contain hydrogen, an alkali metal, or an alkaline earth metal and that correct charge like various zeolites, and the like. These inorganic fillers may be organically treated on their surface in order to improve the compatibility with the polymer material, such as rubber component.

When the expansion ratio improver for polymer materials of the present invention is applied to a rubber component, the inorganic filler is preferably silica in terms of imparting rubber strength, and more preferably silica alone or a combination of silica and one or more inorganic compounds generally used in the rubber industry. When silica and an inorganic compound other than silica are used in combination as the inorganic filler, the total amount of all components of the inorganic filler may be adjusted appropriately within the above range. Silica is preferably added because it can impart rubber strength.

Any commercially available silica can be used. Among them, preferred silica is wet silica, dry silica, or colloidal silica, and more preferably wet silica. Such silica may be organically treated on the surface in order to improve the compatibility with the rubber component.

The BET specific surface area of silica is not particularly limited, and is in the range of 40 to 350 $m^2/g$, for example. Silica with a BET specific surface area in this range has the advantage of achieving both rubber toughness and dispersibility in the rubber component. The BET specific surface area is measured according to ISO 5794/1.

From this point of view, the silica is preferably silica with a BET specific surface area in the range of 80 to 300 $m^2/g$, more preferably silica with a BET specific surface area of 100 to 270 $m^2/g$, and particularly preferably silica with a BET specific surface area of 110 to 270 $m^2/g$.

Commercial products of silica include trade names HD165MP (BET specific surface area = 165 $m^2/g$), HD115MP (BET specific surface area = 115 $m^2/g$), HD200MP (BET specific surface area = 200 $m^2/g$), and HD250MP (BET specific surface area = 250 $m^2/g$), produced by Quechen Silicon Chemical Co., Ltd.; trade names Nipsil AQ (BET specific surface area = 205 $m^2/g$) and Nipsil KQ (BET specific surface area = 240 $m^2/g$), produced by Tosoh Silica Corporation; trade name Ultrasil VN3 (BET specific surface area = 175 $m^2/g$) produced by Degussa; and the like.

Further, in the expansion ratio improver for polymer materials of the present invention in which the carbon black and/or inorganic filler mentioned above are blended, a silane coupling agent, a titanate coupling agent, an aluminate coupling agent, or a zirconate coupling agent may be blended for the purpose of increasing the strength of the polymer material by carbon black and/or silica.

Silane coupling agents that can be used in combination with the carbon black and/or inorganic filler are not particularly limited, and commercial products can be suitably used. Examples of such silane coupling agents include sulfide-based, polysulfide-based, thioester-based, thiol-based, olefin-based, epoxy-based, amino-based, and alkyl-based silane coupling agents.

Examples of sulfide-based silane coupling agents include bis(3-triethoxysilylpropyl)tetrasulfide, bis(3-trimethoxysilylpropyl)tetrasulfide, bis(3-methyldimethoxysilylpropyl)tetrasulfide, bis(2-triethoxysilylethyl)tetrasulfide, bis(3-triethoxysilylpropyl)disulfide, bis(3-trimethoxysilylpropyl)disulfide, bis(3-methyldimethoxysilylpropyl)disulfide, bis(2-triethoxysilylethyl)disulfide, bis(3-triethoxysilylpropyl)trisulfide, bis(3-trimethoxysilylpropyl)trisulfide, bis(3-methyldimethoxysilylpropyl)trisulfide, bis(2-triethoxysilylethyl)trisulfide, bis(3-monoethoxydimethylsilylpropyl)tetrasulfide, bis(3-monoethoxydimethylsilylpropyl)trisulfide, bis(3-monoethoxydimethylsilylpropyl)disulfide, bis(3-monomethoxydimethylsilylpropyl)tetrasulfide, bis(3-monomethoxydimethylsilylpropyl)trisulfide, bis(3-monomethoxydimethylsilylpropyl)disulfide, bis(2-monoethoxydimethylsilylethyl)tetrasulfide, bis(2-monoethoxydimethylsilylethyl)trisulfide, bis(2-monoethoxydimethylsilylethyl)disulfide, and the like. Particularly preferred among these is bis(3-triethoxysilylpropyl)tetrasulfide.

Examples of thioester-based silane coupling agents include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, 2-lauroylthioethyltrimethoxysilane, and the like.

Examples of thiol-based silane coupling agents include 3-mercaptopropyltrimethoxysilane, 3-mercaptopropyltriethoxysilane, 3-mercaptopropylmethyldimethoxysilane, 3-[ethoxybis(3,6,9,12,15-pentoxaoctacosan-1-yloxy)silyl]-1-propanethiol, and the like.

Examples of olefin-based silane coupling agents include dimethoxymethylvinylsilane, vinyltrimethoxysilane, dimethylethoxyvinylsilane, diethoxymethylvinylsilane, triethoxyvinylsilane, vinyltris(2-methoxyethoxy)silane, allyltrimethoxysilane, allyltriethoxysilane, p-styryltrimethoxysilane, 3-(methoxydimethoxydimethylsilyl)propyl acrylate, 3-(trimethoxysilyl)propyl acrylate, 3-[dimethoxy(methyl)silyl]propyl methacrylate, 3-(trimethoxysilyl)propyl methacrylate, 3-[dimethoxy(methyl)silyl]propyl methacrylate, 3-(triethoxysilyl)propyl methacrylate, 3-[tris(trimethylsiloxy)silyl]propyl methacrylate, and the like.

Examples of epoxy-based silane agents include 3-glycidyloxypropyl(dimethoxy)methylsilane, 3-glycidyloxypropyltrimethoxysilane, diethoxy(3-glycidyloxypropyl)methylsilane, triethoxy(3-glycidyloxypropyl)silane, 2-(3,4-epoxycyclohexyl)ethyltrimethoxysilane, and the like. Preferred among these is 3-glycidyloxypropyltrimethoxysilane.

Examples of amino-based silane coupling agents include N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-ethoxysilyl-N-(1,3-dimethylbutylidene)propylamine, N-phenyl-3-aminopropyltrimethoxysilane, N-(vinylbenzyl)-2-aminoethyl-3-aminopropyltrimethoxysilane, and the like. Preferred among these is 3-aminopropyltriethoxysilane.

Examples of alkyl-based silane coupling agents include methyltrimethoxysilane, dimethyldimethoxysilane, trimethylmethoxysilane, methyltriethoxysilane, ethyltrimethoxysilane, n-propyltrimethoxysilane, isobutyltrimethoxysilane, isobutyltriethoxysilane, n-hexyltrimethoxysilane, n-hexyltriethoxysilane, cyclohexylmethyldimethoxysilane, n-octyltriethoxysilane, n-decyltrimethoxysilane, and the like. Preferred among these is methyltriethoxysilane.
Among these silane coupling agents, bis(3-triethoxysilylpropyl)tetrasulfide can be particularly preferably used.
Titanate coupling agents that can be used in combination with the carbon black and/or inorganic filler are not particularly limited, and commercially available products can be suitably used. Examples of such titanate coupling agents include alkoxide-based, chelate-based, and acylate-based titanate coupling agents.
Examples of alkoxide-based titanate coupling agents include tetraisopropyl titanate, tetra-normal butyl titanate, butyl titanate dimer, tetraoctyl titanate, tetra-tertiary butyl titanate, tetrastearyl titanate, and the like. Preferred among these is tetraisopropyl titanate.
Examples of chelate-based titanate coupling agents include titanium acetylacetonate, titanium tetraacetylacetonate, titanium ethylacetoacetate, titanium dodecylbenzenesulfonate compounds, titanium phosphate compounds, titanium octylene glycolate, titanium ethyl acetoacetate, titanium lactate ammonium salt, titanium lactate, titanium ethanol aminate, titanium octylene glycolate, titanium aminoethylaminoethanolate, and the like. Preferred among these is titanium acetylacetonate.
Examples of acylate-based titanate coupling agents include titanium isostearate and the like.
Aluminate coupling agents that can be used in combination with the carbon black and/or inorganic filler are not particularly limited, and commercially available products can be suitably used. Examples of such aluminate coupling agents include 9-octadecenyl acetoacetate aluminum diisopropylate, aluminum secondary butoxide, aluminum trisacetylacetonate, aluminum bisethylacetoacetate monoacetylacetonate, aluminum trisethylacetoacetate, and the like. Preferred among these is 9-octadecenyl acetoacetate aluminum diisopropylate. Zirconate coupling agents that can be used in combination with the carbon black and/or inorganic filler are not particularly limited, and commercially available products can be suitably used. Examples of such zirconate coupling agents include alkoxide-based, chelate-based, and acylate-based zirconate coupling agents.
Examples of alkoxide-based zirconate coupling agents include normal-propyl zirconate, normal-butyl zirconate, and the like. Preferred among these is normal-butyl zirconate.
Examples of chelate-based zirconate coupling agents include zirconium tetraacetylacetonate, zirconium monoacetylacetonate, zirconium ethylacetoacetate, zirconium lactate ammonium salt, and the like. Preferred among these is zirconium tetraacetylacetonate.
Examples of acylate-based zirconate coupling agents include zirconium stearate, zirconium octylate, and the like. Preferred among these is zirconium stearate.
In the present invention, the silane coupling agents, titanate coupling agents, aluminate coupling agents, and zirconate coupling agents can be used singly or in combination of two or more.

1.6. Application

Foams produced by using the expansion ratio improver for polymer materials of the present invention can be used for various applications. Examples include tires, acoustic members, sealing materials, hoses, belts, wire coverings, thermal insulation materials, and the like.
Examples of tires include pneumatic tires (radial tires, bias tires, etc.), solid tires, and the like.
Tire applications are not particularly limited, and examples include passenger car tires, heavy-duty tires, motorcycle tires, studless tires, and the like. Preferred among these applications are studless tires.
Examples of acoustic members include speaker edges, sound absorbers, sound insulators, vibration isolators, vibration-damping materials, and the like.
Examples of sealing materials include rubber packing, oil seals, water seals, jointing materials, weather strips, glass run channels, and the like.
Examples of hoses include radiator hoses, water hoses, concrete transport hoses, and the like.
Examples of belts include transmission belts, conveyor belts, V-belts, and the like.
Examples of wire coverings include coverings for power lines, and the like.
Examples of thermal insulation materials include thermal insulation materials for piping for transporting refrigerants, heat media, etc., and thermal insulation materials for floors, walls, etc.

2. Foaming Agent Composition for Polymer Materials

The foaming agent composition for polymer materials of the present invention contains the expansion ratio improver for polymer materials of the present invention and further contains a chemical foaming agent.
The chemical foaming agent contained in the foaming agent composition for polymer materials of the present

invention can be the same as those mentioned above as chemical foaming agents. Preferred among those are azodicarbonamide, p,p'-oxybisbenzenesulfonyl hydrazide, dinitrosopentamethylenetetramine, and sodium bicarbonate.

In the foaming agent composition for polymer materials of the present invention, the ratio of compound (1) is preferably 0.1 to 99.5 parts by mass, more preferably 0.5 to 50 parts by mass, even more preferably 0.8 to 40 parts by mass, and particularly preferably 1 to 30 parts by mass, based on the total mass of compound (1) in the expansion ratio improver for polymer materials and the chemical foaming agent, which is taken as 100 parts by mass.

Polymer materials that can be applied to the foaming agent composition for polymer materials of the present invention are not particularly limited. Known polymer materials can be widely used, and the materials described above may be used. Among such materials, it is preferable to use rubber and resins.

The foaming agent composition for polymer materials of the present invention may contain a foaming aid. The foaming aid can be the same as those mentioned above as foaming aids. Among such foaming aids, it is preferable to use urea compounds and zinc oxide.

When the foaming agent composition for polymer materials of the present invention contains a foaming aid, the ratio of compound (1) is preferably 0.1 to 99.5 parts by mass, more preferably 0.5 to 80 parts by mass, even more preferably 1 to 70 parts by mass, and particularly preferably 5 to 50 parts by mass, based on the total mass of compound (1) in the expansion ratio improver for polymer materials and the foaming aid, which is taken as 100 parts by mass.

The foaming agent composition for polymer materials of the present invention may contain various ingredients in addition to the expansion ratio improver for polymer materials, a chemical foaming agent, and a foaming aid. The same ingredients as described above can be added.

The foaming agent composition for polymer materials of the present invention can be used in a state in which the expansion ratio improver for polymer materials, a chemical foaming agent, etc. are mixed. In that case, predetermined amounts or appropriate amounts of the expansion ratio improver for polymer materials, a chemical foaming agent, etc. can be weighed, followed by mixing by a known method. Mixing can be performed either wet or dry using, for example, a rotating ball mill, a vibratory ball mill, a planetary mill, a paint shaker, a rocking mill, a rocking mixer, a bead mill, a stirrer, or the like.

Foams produced by using the foaming agent composition for polymer materials of the present invention can be used for various applications, and envisioned applications are described above.

Second Invention

1) Resin Composition

The resin composition of the present invention comprises:

component (a): polyethylene,
component (b): a chemical foaming agent, and
component (c): a compound represented by the following formula (1) or a salt thereof:

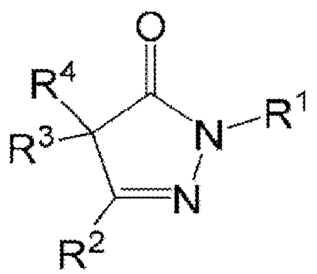

(1)

In formula (1), $R^1$ represents a hydrogen atom, an alkyl group, or an aralkyl group; and $R^2$, $R^3$, and $R^4$ are the same or different and each represents a hydrogen atom, an alkyl group, an aralkyl group, or an aryl group.

In formula (1), each of these groups optionally has one or more substituents.

The resin composition of the present invention contains

0.1 parts by mass to 50 parts by mass of component (b) and
0.1 parts by mass to 50 parts by mass of component (c) based on 100 parts by mass of component (a).

The resin composition of the present invention may be simply a mixture of components (a), (b), and (c), and components (a), (b), and (c) may be mixed in any order.

(1-1) Component (a): Polyethylene

The resin composition of the present invention contains polyethylene as component (a).

As the polyethylene (PE) used in the resin composition of the present invention, low-density polyethylene, medium-density polyethylene, or high-density polyethylene can be used. Preferably low-density polyethylene, and more preferably (branched) low-density polyethylene (LDPE), linear low-density polyethylene (LLDPE), or the like is used.

In the resin composition of the present invention, component (a) is preferably low-density polyethylene (LDPE). Due to the use of LDPE in the resin composition of the present invention, a foam having a high expansion ratio and fine (dense) cells can be obtained.

As the low-density polyethylene (LDPE), it is preferable to use, for example, low-density polyethylene polymerized with a metallocene catalyst, high-pressure method low-density polyethylene (HP-LDPE) produced by high-pressure radical polymerization using a radical initiator, linear low-density polyethylene (LLDPE) produced by coordination ion polymerization using a transition metal catalyst, or the like.

Low-Density Polyethylene (LDPE)

The melt mass-flow rate (MFR) of LDPE is a value in accordance with Japanese Industrial Standard JIS K 7210-1: 2014 (ISO 1133-1: 2011) Plastics - Determination of the melt mass-flow rate (MFR) and melt volume-flow rate (MVR) of thermoplastics - Part 1: Standard method. MFR is expressed in grams per 10 minutes (g/10 min).

The MFR of LDPE is preferably about 0.1 g/10 min to 50 g/10 min, more preferably about 1 g/10 min to 20 g/10 min, even more preferably about 2 g/10 min to 10 g/10 min, and particularly preferably about 3 g/10 min to 5 g/10 min. Due to the use of LDPE with an MFR of about 0.1 g/10 min to 50 g/10 min in the resin composition of the present invention, a foam having a high expansion ratio and fine (dense) cells can be obtained.

The density ($kg/m^3$) of LDPE is a value in accordance with Japanese Industrial Standard JIS K 7112: 1999 Plastics - Methods of determining the density and relative density of non-cellular plastics.

The density of LDPE is preferably about 900 $kg/m^3$ to 950 $kg/m^3$, more preferably about 910 $kg/m^3$ to 940 $kg/m^3$, and even more preferably about 920 $kg/m^3$ to 930 $kg/m^3$. Due to the use of LDPE with a density of about 900 $kg/m^3$ to 950 $kg/m^3$ in the resin composition of the present invention, a foam having a high expansion ratio and fine (dense) cells can be obtained.

(1-2) Component (b): Chemical Foaming Agent

The resin composition of the present invention contains a chemical foaming agent as component (b).

The chemical foaming agent is not particularly limited, and known chemical foaming agents can be widely used.

In the resin composition of the present invention, component (b) is preferably an organic chemical foaming agent. Due to the use of an organic chemical foaming agent in the resin composition of the present invention, a foam having a high expansion ratio and fine (dense) cells can be obtained.

Preferred examples of the organic chemical foaming agent include organic chemical foaming agents, such as azodicarbonamide (ADCA), N,N'-dinitrosopentanemethylenetetramine, p,p'-oxybisbenzenesulfonyl hydrazide, p-toluenesulfonyl hydrazide, p-toluenesulfonyl semicarbazide, diazoaminobenzene, hydrazodicarbonamide, barium azodicarboxylate, azobisisobutyronitrile, monosodium citrate, and other organic acids and metal salts thereof.

In the resin composition of the present invention, the organic chemical foaming agent is preferably an azo-based chemical foaming agent. The azo-based chemical foaming agent is preferably azodicarbonamide (ADCA).

In the resin composition of the present invention, component (b) is preferably an inorganic chemical foaming agent. Due to the use of an inorganic chemical foaming agent in the resin composition of the present invention, a foam having a high expansion ratio and fine (dense) cells can be obtained.

The inorganic chemical foaming agent is preferably an inorganic chemical foaming agent, such as sodium bicarbonate, ammonium hydrogen carbonate, sodium carbonate, ammonium carbonate, aluminum acetate, ammonium nitrite, or sodium borohydride.

The surface of these foaming agents may be chemically treated. Such foaming agents are excellent in terms of prevention of their solidification, dispersibility, dust control, workability, storage stability, etc. Further, compositions and foams obtained by using such foaming agents are excellent in terms of improvement of mechanical properties, miniaturization of cells, etc.

In the resin composition of the present invention, the inorganic chemical foaming agent is preferably sodium bicarbonate.

The above chemical foaming agents can be used singly or as a mixture (blend) of two or more.

Preferred among the above chemical foaming agents is azodicarbonamide (ADCA) or sodium bicarbonate. Due to the use of ADCA or sodium bicarbonate in the resin composition of the present invention, a foam having a high

expansion ratio and fine (dense) cells can be obtained.

The median diameter of azodicarbonamide (ADCA) is preferably about 1 μm to 40 μm, more preferably 2 μm to 25 μm, and even more preferably 4 μm to 20 μm. Due to the use of azodicarbonamide with a median diameter of about 1 μm to 40 μm in the resin composition of the present invention, a foam having a high expansion ratio and fine (dense) cells can be obtained.

The resin composition of the present invention contains 0.1 parts by mass to 50 parts by mass of component (b) based on 100 parts by mass of component (a). The resin composition of the present invention preferably contains component (b) in an amount of 1 part by mass to 30 parts by mass, and more preferably 2 parts by mass to 25 parts by mass, based on 100 parts by mass of component (a). Due to component (b) present in an amount of 0.1 parts by mass to 50 parts by mass based on 100 parts by mass of component (a) in the resin composition of the present invention, a foam having a high expansion ratio and fine (dense) cells can be obtained.

(1-3) Component (c): Compound Represented by Formula (1) or Salt Thereof

The resin composition of the present invention contains a compound represented by the following formula (1) or a salt thereof as component (c):

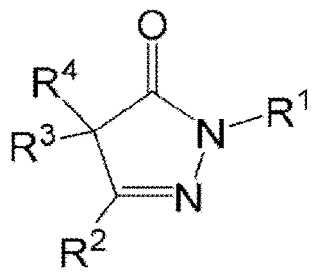

(1)

In formula (1), $R^1$ represents a hydrogen atom, an alkyl group, or an aralkyl group; and $R^2$, $R^3$ and $R^4$ are the same or different and each represents a hydrogen atom, an alkyl group, an aralkyl group, or an aryl group.

In formula (1), each of these groups optionally has one or more substituents.

The compound represented by formula (1) or a salt thereof is also collectively referred to simply as "compound (1) ."

Alkyl Group in Compound (1)

Preferred examples of the alkyl group include linear, branched, or cyclic alkyl groups.

More preferred examples of the alkyl group include $C_{1-4}$ linear or branched alkyl groups, such as methyl, ethyl, n-propyl, isopropyl, n-butyl, isobutyl, s-butyl, and t-butyl.

More preferred examples of the alkyl group include $C_{5-18}$ linear or branched alkyl groups, such as 1-ethylpropyl, n-pentyl, isopentyl, neopentyl, n-hexyl, isohexyl, 3-methylpentyl, n-heptyl, n-octyl, n-nonyl, n-decyl, n-undecyl, n-dodecyl, 5-propylnonyl, n-tridecyl, n-tetradecyl, n-pentadecyl, hexadecyl, heptadecyl, and octadecyl.

More preferred examples of the alkyl group include $C_{3-8}$ cyclic alkyl groups, such as cyclopropyl, cyclobutyl, cyclopentyl, cyclohexyl, cycloheptyl, and cyclooctyl.

Aralkyl Group in Compound (1)

Preferred examples of the aralkyl group include benzyl, phenethyl, trityl, 1-naphthylmethyl, 2-(1-naphthyl)ethyl, and 2-(2-naphthyl)ethyl groups.

Aryl Group in Compound (1)

Preferred examples of the aryl group include phenyl, biphenyl, naphthyl, dihydroindenyl, and 9H-fluorenyl groups.

Substituents in Compound (1)

These alkyl, aralkyl, and aryl groups optionally have one or more substituents at any replaceable position.

Preferred examples of substituents include halogen, amino, aminoalkyl, alkoxycarbonyl, acyl, acyloxy, amide,

carboxyl, carboxyalkyl, formyl, nitrile, nitro, alkyl, hydroxyalkyl, hydroxyl, alkoxy, aryl, aryloxy, thiol, alkylthio, and arylthio groups.

The number of substituents is preferably 1 to 5, and more preferably 1 to 3.

Preferred examples of the halogen atom as a substituent include fluorine, chlorine, bromine, iodine, and astatine atoms; and more preferably fluorine, chlorine, bromine, and iodine atoms.

Preferred examples of the amino group as a substituent include not only an amino group represented by $-NH_2$, but also linear or branched monoalkyl amino groups having about 1 to 6 carbon atoms, such as methylamino, ethylamino, n-propylamino, isopropylamino, n-butylamino, isobutylamino, s-butylamino, t-butylamino, 1-ethylpropylamino, n-pentylamino, neopentylamino, n-hexylamino, isohexylamino, and 3-methylpentylamino groups; and substituted amino groups, such as dialkyl amino groups having two linear or branched alkyl groups having about 1 or 2 carbon atoms, such as dimethylamino, ethylmethylamino, and diethylamino groups.

Preferred examples of the aminoalkyl group as a substituent include aminoalkyl groups having about 1 to 7 carbon atoms, such as aminomethyl, methylamino methyl, ethylamino methyl, dimethylamino methyl, ethyl methylamino methyl, diethylamino methyl, 2-aminoethyl, 2-(methylamino)ethyl, 2-(ethylamino)ethyl, 2-(dimethylamino)ethyl, 2-(ethylmethylamino)ethyl, 2-(diethylamino)ethyl, 3-aminopropyl, 3-(methylamino)propyl, 3-(ethylamino)propyl, 3-(dimethylamino)propyl, 3-(ethylmethylamino)propyl, and 3-(diethylamino)propyl groups; monoalkyl-substituted aminoalkyl groups, dialkyl-substituted aminoalkyl groups, and the like.

Preferred examples of the alkoxycarbonyl group as a substituent include $C_{1-4}$ linear or branched alkoxycarbonyl groups, such as methoxycarbonyl and ethoxycarbonyl.

Preferred examples of the acyl group as a substituent include $C_{1-4}$ linear or branched alkylcarbonyl groups, such as acetyl, propionyl, and pivaloyl groups.

Preferred examples of the acyloxy group as a substituent include $C_{1-4}$ linear or branched acyloxy groups, such as acetyloxy, propionyloxy, and n-butyryloxy groups.

Preferred examples of the amide group as a substituent include carboxylic acid amide groups, such as acetamide and benzamide groups; thioamide groups, such as thioacetamide and thiobenzamide groups; N-substituted amide groups, such as N-methylacetamide and N-benzylacetamide groups; and the like.

Preferred examples of the carboxyalkyl group as a substituent include carboxyalkyl groups, such as carboxymethyl, carboxyethyl, carboxy-n-propyl, carboxy-n-butyl, carboxy-n-pentyl, and carboxy-n-hexyl groups.

Preferred examples of the hydroxyalkyl group as a substituent include hydroxyalkyl groups, such as hydroxymethyl, hydroxyethyl, hydroxy-n-propyl, and hydroxy-n-butyl groups.

Preferred examples of the alkoxy group as a substituent include linear, branched, or cyclic alkoxy groups. More preferred examples include linear or branched alkoxy groups, such as methoxy, ethoxy, n-propoxy, isopropoxy, n-butoxy, t-butoxy, n-pentyloxy, neopentyloxy, and n-hexyloxy groups; cyclic alkoxy groups, such as cyclopropyloxy, cyclobutyloxy, cyclopentyloxy, cyclohexyloxy, cycloheptyloxy, and cyclooctyloxy groups; and the like.

Preferred examples of the aryloxy group as a substituent include phenoxy, biphenyloxy, and naphthoxy groups.

Preferred examples of the alkylthio group as a substituent include methylthio, ethylthio, and n-propylthio groups.

Preferred examples of the arylthio group as a substituent include phenylthio, naphthylthio, and biphenylthio groups.

Compound (1) is preferably a compound wherein $R^1$ is a hydrogen atom.

Compound (1) is preferably a compound wherein $R^2$ is a hydrogen atom, a $C_{1-4}$ linear or branched alkyl group, an aralkyl group, or an aryl group; more preferably a compound wherein $R^2$ is a hydrogen atom or a $C_{1-4}$ linear or branched alkyl group; and even more preferably a compound wherein $R^2$ is a methyl group.

Compound (1) is preferably a compound wherein at least one of $R^3$ and $R^4$ is a hydrogen atom, and more preferably a compound wherein $R^3$ and $R^4$ are both hydrogen atoms.

Compound (1) is preferably a compound wherein $R^1$ is a hydrogen atom, $R^2$ is a hydrogen atom, a $C_{1-4}$ linear or branched alkyl group, an aralkyl group, or an aryl group, and $R^3$ and $R^4$ are both hydrogen atoms.

Compound (1) is more preferably a compound wherein $R^1$ is a hydrogen atom, $R^2$ is a hydrogen atom or a $C_{1-4}$ linear or branched alkyl group, and $R^3$ and $R^4$ are both hydrogen atoms.

Preferred examples of the compound represented by formula (1) include 5-pyrazolone, 3-methyl-5-pyrazolone, 3-(naphthalen-2-yl)-1H-pyrazol-5(4H)-one, 3-phenyl-1H-pyrazol-5(4H)-one, 3-propyl-1H-pyrazol-5(4H)-one, 3-undecyl-1H-pyrazol-5(4H)-one, 4-(2-hydroxyethyl)-3-methyl-1H-pyrazol-5(4H)-one, 4-benzyl-3-methyl-1H-pyrazol-5(4H)-one, 5-methyl-2-(4-nitrophenyl)-1H-pyrazol-3(2H)-one, and the like.

More preferred examples of the compound represented by formula (1) include 5-pyrazolone, 3-methyl-5-pyrazolone, 3-(naphthalen-2-yl)-1H-pyrazol-5(4H)-one, 3-phenyl-1H-pyrazol-5(4H)-one, and 3-propyl-1H-pyrazol-5(4H)-one.

Even more preferred examples of the compound represented by formula (1) include 3-methyl-5-pyrazolone.

As component (c) in the resin composition of the present invention, the above compounds may be contained singly or as a mixture of two or more.

Some of compounds (1) generate tautomers. Chemical equilibrium of tautomers can be achieved if tautomerization is possible (e.g., in a solution).

Compounds (1) are present as, for example, tautomers represented by formulas (2) to (7).

The compound of formula (1) wherein $R^1$ and $R^3$ are hydrogen atoms (compound (1)-A) has tautomers represented by the following formulas (2) to (4):

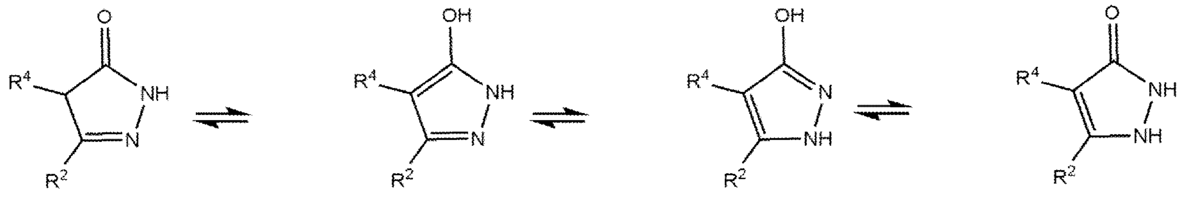

(1)-A (2) (3) (4)

wherein $R^2$ and $R^4$ are as defined above.

The compound of formula (1) wherein $R^3$ is a hydrogen atom (compound (1)-B) has tautomers represented by the following formulas (5) and (6):

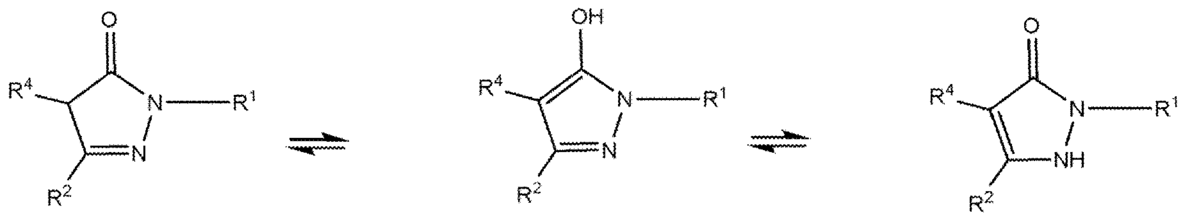

(1)-B (5) (6)

wherein $R^1$, $R^2$, and $R^4$ are as defined above.

The compound of formula (1) wherein $R^1$ is a hydrogen atom (compound (1)-C) has a tautomer represented by the following formula (7):

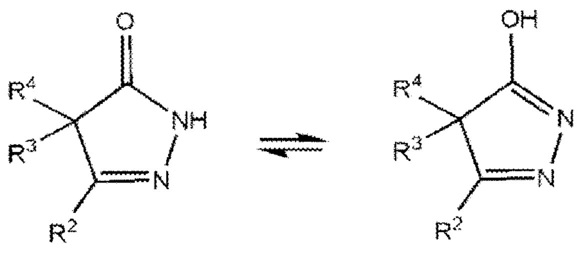

(1)-C (7)

wherein $R^2$, $R^3$, and $R^4$ are as defined above.

The tautomers represented by formulas (2) to (7) and compound (1) reach an equilibrium state in which both isomers coexist. Therefore, unless otherwise specified, in the present specification, all the tautomers of compound (1) fall within the scope of the present invention.

The salts of the compound represented by formula (1) include various types of salts. Preferred examples include inorganic acid salts, such as hydrochloride, sulfate, and nitrate; organic acid salts, such as acetate and methanesulfonate; alkali metal salts, such as sodium salt and potassium salt; alkaline earth metal salts, such as magnesium salt and calcium salt; ammonium salts, such as dimethylammonium and triethylammonium; and the like.

The resin composition of the present invention contains 0.1 parts by mass to 50 parts by mass of component (c) based on 100 parts by mass of component (a). The resin composition of the present invention preferably contains component (c) in an amount of 0.1 parts by mass to 10 parts by mass, and more preferably 0.1 parts by mass to 5 parts

by mass, based on 100 parts by mass of component (a). Due to component (c) present in an amount of 0.1 parts by mass to 50 parts by mass based on 100 parts by mass of component (a) in the resin composition of the present invention, a foam having a high expansion ratio and fine (dense) cells can be obtained.

(1-4) Component (d): Crosslinking Agent

The resin composition of the present invention preferably contains a crosslinking agent as component (d).
The crosslinking agent is preferably dicumyl peroxide, benzoyl peroxide, dihexyl peroxide, di-t-butylperoxy diisopropylbenzene, 2,5-dimethyl-2,5-di-(t-butylperoxy)hexane, 2,5-dimethyl-2,5-di-(t-butylperoxy)hexyne-3, p-benzoquinone dioxime, lead oxide, zinc oxide, mercaptobenzothiazole, 2,2'-dibenzothiazolyl disulfide, or the like. The crosslinking agent is more preferably dicumyl peroxide.
The crosslinking agents may be contained singly or as a mixture of two or more.
The resin composition of the present invention preferably contains 0.1 parts by mass to 10 parts by mass of component (d) based on 100 parts by mass of component (a). The resin composition of the present invention more preferably contains component (d) in an amount of 0.1 parts by mass to 5 parts by mass, and more preferably 0.1 parts by mass to 2 parts by mass, based on 100 parts by mass of component (a). Due to component (d) present in an amount of 0.1 parts by mass to 10 parts by mass based on 100 parts by mass of component (a) in the resin composition of the present invention, a foam having a high expansion ratio and fine (dense) cells can be obtained.

(1-5) Component (e): Foaming Aid

The resin composition of the present invention preferably contains a foaming aid as component (e).
Preferred examples of the foaming aid include urea, mixtures of urea, fatty acids, and fatty acid metal salts; urea compounds, such as thiourea, tetramethylurea, dimethylthiourea, semicarbazide, and carbohydrazide; zinc compounds, such as zinc oxide, zinc stearate, zinc benzenesulfinate, zinc toluenesulfonate, zinc trifluoromethanesulfonate, and zinc carbonate; and lead compounds, such as lead dioxide and tribasic lead.
The foaming aids may be contained singly or as a mixture of two or more.
The foaming aid is preferably used in combination with component (b), such as azodicarbonamide, N,N'-dinitrosopentanemethylenetetramine, p,p'-oxybisbenzenesulfonyl hydrazide, p-toluenesulfonyl hydrazide, p-toluenesulfonyl semicarbazide, or hydrazodicarbonamide, and more preferably used in combination with azodicarbonamide.

(1-6) Other Ingredients

The resin composition of the present invention preferably contains carbon black, inorganic fillers (e.g., silica), silane coupling agents, antiaging agents, antiozonants, softeners, processing aids, waxes, resins, oils, $C_{8-30}$ fatty acids such as stearic acid, zinc oxide (ZnO), and the like, which are suitably selected.

(2) Foam

The present invention is preferably a foam foamed from the resin composition.
Due to foaming of the resin composition of the present invention, a foam having a high expansion ratio and fine (dense) cells can be obtained.
The foam also includes a molded product obtained by molding the foam.

(2-1) Expansion Ratio Index

The foam of the present invention is produced from a composition containing component (a): polyethylene, component (b): a chemical foaming agent, and component (c): compound (1).
The foam of the present invention has a larger expansion ratio index and a higher expansion ratio than those a foam produced from a composition containing components (a) and (b) and not containing component (c).
The expansion ratio index is a value calculated based on the following formula.

$$\text{Expansion ratio} = \text{specific gravity before foam molding}/\text{specific gravity after foam molding} \times 100$$

Expansion ratio index = (expansion ratio of foam produced from resin composition of present invention)/(expansion ratio of foam produced from resin composition not containing component (c)) × 100

(2-2) Average Cell Diameter Index

The foam of the present invention is produced from a composition containing component (a): polyethylene, component (b): a chemical foaming agent, and component (c): compound (1).
The foam of the present invention has a smaller average cell diameter index and a denser cell diameter than those of a foam produced from a composition containing components (a) and (b) and not containing component (c).
The average cell diameter index is a value calculated based on the following formula.

Average cell diameter index = (average cell diameter of foam produced from resin composition of present invention)/(average cell diameter of foam produced from resin composition not containing component (c)) × 100

(3) Applications of Foam

Preferred applications of the resin composition or foam of the present invention are thermal insulation materials, curing materials, joint materials (sealing materials), gap-filling materials, covering materials, waterproof materials, sound insulators, floaters, cushioning materials, shock absorbing materials, rug core materials, toys, and the like.
More preferred applications of the resin composition or foam of the present invention are thermal insulation materials. Examples of thermal insulation materials include thermal insulation materials for piping for transporting refrigerants, heat media, etc., and thermal insulation materials for floors, walls, etc.

(4) Method for Producing Foam

The resin composition of the present invention can be produced by mixing components (a), (b), and (c) described above. The resin composition of the present invention is mixed with other ingredients, as necessary. The order of mixing components (a), (b), and (c), and the order of mixing other ingredients may be suitably set.
The foam of the present invention can be produced by foaming a resin composition containing components (a), (b), and (c). The foam of the present invention can be produced by heating a mixture of the resin composition to perform foaming.
The heating temperature may be equal to or higher than the decomposition temperature of component (b) (chemical foaming agent) mixed, and is preferably about 50°C to 300°C, more preferably about 80°C to 250°C, and even more preferably about 100°C to 200°C.
The heating time is preferably about 5 seconds to 24 hours, more preferably 10 seconds to 12 hours, and even more preferably about 5 minutes to 3 hours.
The embodiments of the present invention are described above; however, the present invention is not limited to these examples. Needless to say, the present invention can be carried out in various forms without departing from the gist of the present invention.

Examples

The embodiments of the present invention are described in more detail below based on Examples. The present invention is not limited thereto.

Specific Embodiments of First Invention

Examples 1 to 4 and Comparative Examples 1 to 4: Production of Foam by Applying Expansion Ratio Improver for Polymer Materials of Present Invention to Resin

The components shown in Table 1 below were mixed at the shown ratio (parts by mass) with a mixing roll. The mixture was placed in a press machine heated to 110°C to prepare a pre-foamed sheet using a mold (160 mm length, 160 mm width, and 3 mm thickness). The pre-foamed sheet was heated in a gear oven at 220°C to produce a foam.

Examples 1 to 4 and Comparative Examples 1 to 4: Expansion Ratio Index

Regarding the expansion ratio, the specific gravity was measured before and after foam molding using an electronic hydrometer (MDS-300, produced by Alfa Mirage), and the expansion ratio was calculated. For comparison, foams were prepared using the same formulation and the same production process as in each Example, except that the expansion ratio improver was not added (Comparative Examples 1 to 4), their expansion ratio was expressed as an index set to 100, and the expansion ratio index was calculated based on the following formula. The larger the value of expansion ratio index, the higher the expansion ratio and the better the foam.

Formula: expansion ratio = specific gravity before foam molding/specific gravity after foam molding × 100

Formula: expansion ratio index = (expansion ratio of Example 1) × 100/(expansion ratio of Comparative Example 1)

Formula: expansion ratio index = (expansion ratio of Example 2) × 100/(expansion ratio of Comparative Example 2)

Formula: expansion ratio index = (expansion ratio of Example 3) × 100/(expansion ratio of Comparative Example 3)

Formula: expansion ratio index = (expansion ratio of Example 4) × 100/(expansion ratio of Comparative Example 4)

Table 1

| Component | Example | | | | Comp. Example | | | |
|---|---|---|---|---|---|---|---|---|
| | 1 | 2 | 3 | 4 | 1 | 2 | 3 | 4 |
| Low-density polyethylene (LDPE)*1 | 100 | 100 | 100 | 100 | 100 | 100 | 100 | 100 |
| Crosslinking agent*2 | 0.7 | 0.7 | 0.7 | 0.7 | 0.7 | 0.7 | 0.7 | 0.7 |
| Foaming agent A-1*3 | 17 | | | | 17 | | | |

(continued)

| Component | Example | | | | Comp. Example | | | |
|---|---|---|---|---|---|---|---|---|
| | 1 | 2 | 3 | 4 | 1 | 2 | 3 | 4 |
| Foaming agent A-2*4 | | 17 | | | | 17 | | |
| Foaming agent A-3*5 | | | 17 | | | | 17 | |
| Foaming agent B*6 | | | | 17 | | | | 17 |
| Expansion ratio improver for polymer materials A*7 | 1 | 1 | 1 | 1 | | | | |
| Expansion ratio index (larger is better) | 111 | 110 | 111 | 178 | 100 | 100 | 100 | 100 |

The details of each component in Table 1 are as described below. *1: low-density polyethylene (LDPE); Sumikathene L-405, produced by Sumitomo Chemical Co., Ltd.
*2: crosslinking agent; dicumyl peroxide; Percumyl D, produced by NOF Corporation
*3: foaming agent A-1; azodicarbonamide; Unifoam AZ VI-50ST, produced by Otsuka Chemical Co., Ltd.
*4: foaming agent A-2; azodicarbonamide; Unifoam AZ VI-25, produced by Otsuka Chemical Co., Ltd.
*5: foaming agent A-3; azodicarbonamide; Unifoam AZ C-12I, produced by Otsuka Chemical Co., Ltd.
*6: foaming agent B; sodium bicarbonate; Unifoam AZ P-5, produced by Otsuka Chemical Co., Ltd.
*7: expansion ratio improver for polymer materials A; 3-methyl-5-pyrazolone, produced by Otsuka Chemical Co., Ltd.

Examples 5 to 8 and Comparative Examples 5 to 8: Production of Foam by Applying Expansion Ratio Improver for Polymer Materials of Present Invention to Resin

The components shown in Table 2 below were mixed at the shown ratio (parts by mass) with a mixing roll. The mixture was cured until its temperature became 40°C or lower, and then cured at 25°C overnight to obtain a pre-foamed composition. A press machine heated to 160°C was used to produce a foam using a mold with an inner diameter of 63 mm and an outer diameter of 70 mm.

Examples 5 to 8 and Comparative Examples 5 to 8: Expansion Ratio Index

Regarding the expansion ratio, the specific gravity was measured before and after foam molding using an electronic hydrometer (MDS-300, produced by Alfa Mirage), and the expansion ratio was calculated. For comparison, foams were prepared using the same formulation and the same production process as in each Example, except that the expansion ratio improver was not added (Comparative Examples 5 to 8), their expansion ratio was expressed as an index set to 100, and the expansion ratio index was calculated based on the following formula. The larger the value of expansion ratio index, the higher the expansion ratio and the better the foam.

Formula: expansion ratio = specific gravity before foam molding/specific gravity after foam molding × 100

Formula: expansion ratio index = (expansion ratio of Example 5) × 100/(expansion ratio of Comparative Example 5)

Formula: expansion ratio index = (expansion ratio of Example 6) × 100/(expansion ratio of Comparative Example 6)

Formula: expansion ratio index = (expansion ratio of Example 7) × 100/(expansion ratio of Comparative Example 7)

Formula: expansion ratio index = (expansion ratio of Example 8) × 100/(expansion ratio of Comparative Example 8)

Table 2

| Component | Example | | | | Comp. Example | | | |
|---|---|---|---|---|---|---|---|---|
| | 5 | 6 | 7 | 8 | 5 | 6 | 7 | 8 |
| Ethylene vinyl acetate (EVA)*8 | 100 | 100 | 100 | 100 | 100 | 100 | 100 | 100 |
| Crosslinking agent*2 | 0.8 | 0.8 | 0.8 | 0.8 | 0.8 | 0.8 | 0.8 | 0.8 |
| Stearic acid*9 | 1 | 1 | 1 | 1 | 1 | 1 | 1 | 1 |
| Calcium carbonate A*10 | 5 | 5 | 5 | 5 | 5 | 5 | 5 | 5 |
| Zinc oxide A*11 | 2 | | | | 2 | | | |
| Foaming agent A-4*12 | 4 | | | | 4 | | | |
| Foaming agent B*6 | | 10 | | | | 10 | | |
| Foaming agent C*13 | | | 8 | | | | 8 | |
| Foaming agent D*14 | | | | 4 | | | | 4 |
| Foaming aid*15 | | | | 4 | | | | 4 |
| Expansion ratio improver for polymer materials A*7 | 1 | 1 | 1 | 1 | | | | |
| Expansion ratio index (larger is better) | 102 | 180 | 108 | 112 | 100 | 100 | 100 | 100 |

The details of each component in Table 2 are as described below. *8: ethylene vinyl acetate (EVA); Ultrathene 630, produced by Tosoh Corporation
*9: stearic acid; Stearic Acid 50S, produced by New Japan Chemical Co., Ltd.
*10: calcium carbonate A; SS#30, produced by Nitto Funka Kogyo K.K.
*11: zinc oxide A; fine zinc white, produced by The Honjo Chemical Corporation
*12: foaming agent A-4; azodicarbonamide; Unifoam AZ HJ, produced by Otsuka Chemical Co., Ltd.
*13: foaming agent C; p,p'-oxybisbenzenesulfonyl hydrazide; Unifoam AZ 100, produced by Otsuka Chemical Co., Ltd.
*14: foaming agent D; dinitrosopentamethylenetetramine; Celmike A, produced by Sankyo Kasei Co., Ltd.
*15: foaming aid; Unifoam AZ 01, produced by Otsuka Chemical Co., Ltd.

Examples 9 to 15 and Comparative Examples 9 and 10: Production of Foam by Applying Expansion Ratio Improver for Polymer Materials of Present Invention to Rubber

The components shown in step A of Table 3 below were mixed at the shown ratio (parts by mass) in a Banbury mixer. After the mixture was cured until its temperature became 60°C or lower, the components shown in step B of Table 3 were put at the shown ratio (parts by mass). The mixture was mixed so that its maximum temperature became 70°C or lower, thereby forming a foam.

Examples 9 to 15 and Comparative Examples 9 and 10: Expansion Ratio Index

Regarding the expansion ratio, the specific gravity was measured before and after foam molding using an electronic hydrometer (MDS-300, produced by Alfa Mirage), and the expansion ratio was calculated. For comparison,

foams were prepared using the same formulation and the same production process as in each Example, except that the expansion ratio improver was not added (Comparative Examples 9 and 10), their expansion ratio was expressed as an index set to 100, and the expansion ratio index was calculated based on the following formula. The larger the value of expansion ratio index, the higher the expansion ratio and the better the foam.

Formula: expansion ratio = specific gravity before foam molding/specific gravity after foam molding × 100

Formula: expansion ratio index = (expansion ratio of each of Examples 9 to 14) × 100/(expansion ratio of Comparative Example 9)

Formula: expansion ratio index = (expansion ratio of Example 15) × 100/(expansion ratio of Comparative Example 10)

Table 3

| Step | Component | Example | | | | | | | Comp. Example | |
|---|---|---|---|---|---|---|---|---|---|---|
| | | 9 | 10 | 11 | 12 | 13 | 14 | 15 | 9 | 10 |
| A | Butyl rubber*16 | 100 | 100 | 100 | 100 | 100 | 100 | 100 | 100 | 100 |
| | Carbon black A*17 | 60 | 60 | 60 | 60 | 60 | 60 | 60 | 60 | 60 |
| | Wax*18 | 2 | 2 | 2 | 2 | 2 | 2 | 2 | 2 | 2 |
| | Stearic acid*9 | 2 | 2 | 2 | 2 | 2 | 2 | 2 | 2 | 2 |
| | Oil*19 | 23 | 23 | 23 | 23 | 23 | 23 | 23 | 23 | 23 |
| | Zinc oxide B*20 | 5 | 5 | 5 | 5 | 5 | 5 | 5 | 5 | 5 |
| | Expansion ratio improver for polymer materials A*7 | 1 | 2 | 3 | | | | 1 | | |
| B | Vulcanization accelerator A*21 | 1 | 1 | 1 | 1 | 1 | 1 | 1 | 1 | 1 |
| | Vulcanization accelerator B*22 | 1 | 1 | 1 | 1 | 1 | 1 | 1 | 1 | 1 |
| | Sulfur*23 | 1.5 | 1.5 | 1.5 | 1.5 | 1.5 | 1.5 | 1.5 | 1.5 | 1.5 |
| | Foaming agent A-5*24 | 5 | 5 | 5 | 5 | 5 | 5 | 5 | 5 | 5 |
| | Foaming aid*15 | 7 | 7 | 7 | 7 | 7 | 7 | 7 | 7 | 7 |
| | Foaming agent B*6 | | | | | | | 5 | | 5 |
| | Expansion ratio improver for polymer materials A*7 | | | | 1 | 2 | 3 | | | |

(continued)

| Step | Component | Example | | | | | | | Comp. Example | |
|---|---|---|---|---|---|---|---|---|---|---|
| | | 9 | 10 | 11 | 12 | 13 | 14 | 15 | 9 | 10 |
| Expansion ratio index | | 153 | 157 | 193 | 126 | 183 | 145 | 139 | 100 | 100 |

The details of each component in Table 3 are as described below. *16: butyl rubber; JSR BUTYL 365, produced by JSR
*17: carbon black A; Seast SO (N550), produced by Tokai Carbon Co., Ltd.
*18: wax; Sunnoc, produced by Ouchi Shinko Chemical Industrial Co., Ltd.
*19: oil; Diana Process Oil NR-26, produced by Idemitsu Showa Shell
*20: zinc oxide B; Type 1, produced by Sakai Chemical Industry Co., Ltd.
*21: vulcanization accelerator A; Nocceler M-P, produced by Ouchi Shinko Chemical Industrial Co., Ltd.
*22: vulcanization accelerator B; Nocceler TT-P, produced by Ouchi Shinko Chemical Industrial Co., Ltd.
*23: sulfur; HK200-5, produced by Hosoi Chemical Industry Co., Ltd.
*24: foaming agent A-5; Unifoam AZ VI-40 (azodicarbonamide), produced by Otsuka Chemical Co., Ltd.

Examples 16 to 26 and Comparative Examples 11 and 12: Production of Foam by Applying Expansion Ratio Improver for Polymer Materials of Present Invention to Rubber

The components shown in step A of Table 4 below were mixed at the shown ratio (parts by mass) in a Banbury mixer. After the mixture was cured until its temperature became 60°C or lower, the components shown in step B of Table 4 were put at the shown ratio (parts by mass). The mixture was mixed so that its maximum temperature became 70°C or lower, thereby forming a foam.

Examples 16 to 26 and Comparative Examples 11 and 12: Expansion Ratio Index

Regarding the expansion ratio, the specific gravity was measured before and after foam molding using an electronic hydrometer (MDS-300, produced by Alfa Mirage), and the expansion ratio was calculated. For comparison, foams were prepared using the same formulation and the same production process as in each Example, except that the expansion ratio improver was not added (Comparative Examples 11 to 12), their expansion ratio was expressed as an index set to 100, and the expansion ratio index was calculated based on the following formula. The larger the value of expansion ratio index, the higher the expansion ratio and the better the foam.

Formula: expansion ratio
= specific gravity before foam molding/specific gravity after foam molding × 100

Formula: expansion ratio index
= (expansion ratio of each of Examples 16 to 23) × 100/(expansion ratio of Comparative Example 11)

Formula: expansion ratio index
= (expansion ratio of each of Examples 24 to 26) × 100/(expansion ratio of Comparative Example 12)

Table 4

| Step | Component | Example | | | | | | | | | | | Comp. Ex. | |
|---|---|---|---|---|---|---|---|---|---|---|---|---|---|---|
| | | 16 | 17 | 18 | 19 | 20 | 21 | 22 | 23 | 24 | 25 | 26 | 11 | 12 |
| A | Natural rubber*25 | 50 | 50 | 50 | 50 | 50 | 50 | 50 | 50 | 50 | 50 | 50 | 50 | 50 |
| | Butadiene rubber*26 | 50 | 50 | 50 | 50 | 50 | 50 | 50 | 50 | 50 | 50 | 50 | 50 | 50 |
| | Silica*27 | 35 | 35 | 35 | 35 | 35 | 35 | 35 | 35 | 35 | 35 | 35 | 35 | 35 |
| | Carbon black B*28 | 20 | 20 | 20 | 20 | 20 | 20 | 20 | 20 | 20 | 20 | 20 | 20 | 20 |
| | Silane coupling agent*29 | 2.8 | 2.8 | 2.8 | 2.8 | 2.8 | 2.8 | 2.8 | 2.8 | 2.8 | 2.8 | 2.8 | 2.8 | 2.8 |
| | Antiaging agent*30 | 1 | 1 | 1 | 1 | 1 | 1 | 1 | 1 | 1 | 1 | 1 | 1 | 1 |
| | Wax*18 | 2 | 2 | 2 | 2 | 2 | 2 | 2 | 2 | 2 | 2 | 2 | 2 | 2 |
| | Oil*19 | 10 | 10 | 10 | 10 | 10 | 10 | 10 | 10 | 10 | 10 | 10 | 10 | 10 |
| | Stearic acid*9 | 2 | 2 | 2 | 2 | 2 | 2 | 2 | 2 | 2 | 2 | 2 | 2 | 2 |
| | Zinc oxide B*20 | 3.5 | 3.5 | 3.5 | 3.5 | 3.5 | 3.5 | 3.5 | 3.5 | 3.5 | 3.5 | 3.5 | 3.5 | 3.5 |
| | Expansion ratio improver for polymer materials A*7 | | | | | | 0.5 | 2 | 4 | 2 | 4 | 6 | | |
| B | Vulcanization accelerator A*21 | 0.8 | 0.8 | 0.8 | 0.8 | 0.8 | 0.8 | 0.8 | 0.8 | 0.8 | 0.8 | 0.8 | 0.8 | 0.8 |
| | Vulcanization accelerator C*31 | 1 | 1 | 1 | 1 | 1 | 1 | 1 | 1 | 1 | 1 | 1 | 1 | 1 |
| | Sulfur*23 | 1 | 1 | 1 | 1 | 1 | 1 | 1 | 1 | 1 | 1 | 1 | 1 | 1 |
| | Foaming agent A-5*24 | 2.75 | 2.75 | 2.75 | 2.75 | 2.75 | 2.75 | 2.75 | 2.75 | | | | 2.75 | |
| | Foaming agent B*6 | | | | | | | | | 5 | 5 | 5 | | 5 |
| | Foaming aid*15 | 2.75 | 2.75 | 2.75 | 2.75 | 2.75 | 2.75 | 2.75 | 2.75 | | | | 2.75 | |
| | Expansion ratio improver for polymer materials A*7 | 0.5 | 1 | 2 | 3 | 4 | | | | | | | | |
| Expansion ratio index | | 101 | 103 | 107 | 116 | 116 | 107 | 110 | 125 | 104 | 105 | 105 | 100 | 100 |

The details of each component in Table 4 are as described below. *25: natural rubber; TSR-20, produced by Guangken Rubber
*26: butadiene rubber; UBEPOL BR 150B, produced by UBE Corporation
*27: silica; Nipsil AQ, produced by Tosoh Corporation
*28: carbon black B; Seast 7HM (N234), produced by Tokai Carbon Co., Ltd.
*29: silane coupling agent; Si69, produced by Evonic Industries
*30: antiaging agent; Nocrac 6C, produced by Ouchi Shinko Chemical Industrial Co., Ltd.
*31: vulcanization accelerator C; Nocceler CZ-G, produced by Ouchi Shinko Chemical Industrial Co., Ltd.

Examples 27 to 32 and Comparative Examples 13 to 16: Production of Foam by Applying Expansion Ratio Improver for Polymer Materials of Present Invention to Rubber

The components shown in step A of Table 5 below were mixed at the shown ratio (parts by mass) in a Banbury mixer. After the mixture was cured until its temperature became 60°C or lower, the components shown in step B of Table 5 were put at the shown ratio (parts by mass). The mixture was mixed so that its maximum temperature became 70°C or lower, thereby forming a foam.

Examples 27 to 32 and Comparative Examples 13 to 16: Expansion Ratio Index

Regarding the expansion ratio, the specific gravity was measured before and after foam molding using an electronic hydrometer (MDS-300, produced by Alfa Mirage), and the expansion ratio was calculated. For comparison, foams were prepared using the same formulation and the same production process as in each Example, except that the expansion ratio improver was not added (Comparative Examples 13 to 16), their expansion ratio was expressed as an index set to 100, and the expansion ratio index was calculated based on the following formula. The larger the value of expansion ratio index, the higher the expansion ratio and the better the foam.

Formula: expansion ratio = specific gravity before foam molding/specific gravity after foam molding × 100

Formula: expansion ratio index = (expansion ratio of Example 27) × 100/(expansion ratio of Comparative Example 13)

Formula: expansion ratio index = (expansion ratio of each of Examples 28 to 30) × 100/(expansion ratio of Comparative Example 14)

Formula: expansion ratio index = (expansion ratio of Example 31) × 100/(expansion ratio of Comparative Example 15)

Formula: expansion ratio index = (expansion ratio of Example 32) × 100/(expansion ratio of Comparative Example 16)

Table 5

| Step | Component | Example | | | | | | Comp. Example | | | |
|---|---|---|---|---|---|---|---|---|---|---|---|
| | | 27 | 28 | 29 | 30 | 31 | 32 | 13 | 14 | 15 | 16 |
| A | EPDM*32 | 100 | 100 | 100 | 100 | 100 | 100 | 100 | 100 | 100 | 100 |
| | Carbon black C*33 | 80 | 80 | 80 | 80 | 80 | 80 | 80 | 80 | 80 | 80 |
| | Calcium carbonate B*34 | 15 | 15 | 15 | 15 | 15 | 15 | 15 | 15 | 15 | 15 |
| | Oil*19 | 45 | 45 | 45 | 45 | 45 | 45 | 45 | 45 | 45 | 45 |
| | Stearic acid*9 | 2 | 2 | 2 | 2 | 2 | 2 | 2 | 2 | 2 | 2 |
| | Zinc oxide B*20 | 5 | 5 | 5 | 5 | 5 | 5 | 5 | 5 | 5 | 5 |
| | Expansion ratio improver for polymer materials A*7 | 1 | 1 | | | 1 | 1 | | | | |
| B | Vulcanization accelerator D*35 | 1 | 1 | 1 | 1 | 1 | 1 | 1 | 1 | 1 | 1 |
| | Vulcanization accelerator E*36 | 1.5 | 1.5 | 1.5 | 1.5 | 1.5 | 1.5 | 1.5 | 1.5 | 1.5 | 1.5 |
| | Vulcanization accelerator F*37 | 0.5 | 0.5 | 0.5 | 0.5 | 0.5 | 0.5 | 0.5 | 0.5 | 0.5 | 0.5 |
| | Vulcanization accelerator G*38 | 1 | 1 | 1 | 1 | 1 | 1 | 1 | 1 | 1 | 1 |
| | Sulfur*23 | 0.5 | 0.5 | 0.5 | 0.5 | 0.5 | 0.5 | 0.5 | 0.5 | 0.5 | 0.5 |
| | Foaming agent A-5*24 | 6 | 6 | 6 | 6 | | | 6 | 6 | | |
| | Foaming agent B*6 | | | | | 6 | | | | 6 | |
| | Foaming agent C*13 | | | | | | 6 | | | | 6 |
| | Foaming aid*12 | | 3 | 3 | 3 | | | | 3 | | |
| | Expansion ratio improver for polymer materials A*7 | | | 1 | | | | | | | |
| | Expansion ratio improver for polymer materials B*39 | | | | 1 | | | | | | |
| Expansion ratio index | | 108 | 126 | 124 | 109 | 101 | 125 | 100 | 100 | 100 | 100 |

The details of each component in Table 5 are as described below. *32: EPDM; Esprene 505A, produced by Sumitomo Chemical Co., Ltd.
*33: carbon black C; #50, produced by Asahi Carbon Co., Ltd.
*34: calcium carbonate; light calcium carbonate, produced by Toyo Denka Kogyo Co., Ltd.
*35: vulcanization accelerator D; Nocceler M, produced by Ouchi Shinko Chemical Industrial Co., Ltd.
*36: vulcanization accelerator E; Nocceler BZ-P, produced by Ouchi Shinko Chemical Industrial Co., Ltd.
*37: vulcanization accelerator F; Nocceler TET-G, produced by Ouchi Shinko Chemical Industrial Co., Ltd.
*38: vulcanization accelerator G; Nocceler TRA, produced by Ouchi Shinko Chemical Industrial Co., Ltd.
*39: expansion ratio improver for polymer materials B; 3-methyl-1-phenyl-5-pyrazolone, produced by Tokyo Chemical Industry Co., Ltd.

## Specific Embodiments of Second Invention

### 1) Production of High-Expansion Ratio Foam

The components shown in Tables 6 to 8 were mixed at the shown ratio (parts by mass) in a Banbury mixer. The mixture was then heated in a gear oven at 220°C to produce a high-expansion ratio foam.

### (2) Expansion Ratio Index

The expansion ratio was calculated by measuring the specific gravity before and after foam molding using an

electronic hydrometer (MDS-300, produced by Alfa Mirage).

For comparison, foams were prepared using the same formulation and the same production process as in each Example, except that component (c) was not added (foams of the Comparative Examples), their expansion ratio was expressed as an index set to 100, and the expansion ratio index was calculated based on the following formula.

The larger the value of expansion ratio index, the higher the expansion ratio and the better the foam.

Expansion ratio = (specific gravity before foam molding (unfoamed))/(specific gravity after foam molding (foamed)) × 100

Expansion ratio index of Example 1 = (expansion ratio of Example 1)/(expansion ratio of Comparative Example 1) × 100

Expansion ratio index of Example 2 = (expansion ratio of Example 2)/(expansion ratio of Comparative Example 2) × 100

Expansion ratio index of Example 3 = (expansion ratio of Example 3)/(expansion ratio of Comparative Example 3) × 100

Expansion ratio index of Example 4 = (expansion ratio of Example 4)/(expansion ratio of Comparative Example 4) × 100

Expansion ratio index of Example 5 = (expansion ratio of Example 5)/(expansion ratio of Comparative Example 5) × 100

Expansion ratio index of Example 6 = (expansion ratio of Example 6)/(expansion ratio of Comparative Example 6) × 100

Expansion ratio index of each of Examples 7-1 to 7-5 = (expansion ratio of each of Examples 7-1 to 7-5)/(expansion ratio of Comparative Example 7) × 100

Expansion ratio index of Example 8
= (expansion ratio of Example 8)/(expansion ratio of Comparative Example 8) × 100

Expansion ratio index of Example 9
= (expansion ratio of Example 9)/(expansion ratio of Comparative Example 9) × 100

Expansion ratio index of Example 10
= (expansion ratio of Example 10)/(expansion ratio of Comparative Example 10) × 100

Expansion ratio index of each of Examples 11-1 to 11-5
= (expansion ratio of each of Examples 11-1 to 11-5)/(expansion ratio of Comparative Example 11) × 100

Expansion ratio index of Example 12
= (expansion ratio of Example 12)/(expansion ratio of Comparative Example 12) × 100

Expansion ratio index of Example 13
= (expansion ratio of Example 13)/(expansion ratio of Comparative Example 13) × 100

(3) Average Cell Diameter Index

The average cell diameter was measured according to ASTM D2842-69.

For comparison, foams were prepared using the same formulation and the same production process as in each Example, except that component (c) was not added (foams of the Comparative Examples), their average cell diameter was expressed as an index set to 100, and the average cell diameter index was calculated based on the following formula.

The smaller the value of average cell diameter index, the denser the cell diameter and the better the foam.

Average cell diameter index of Example 1
= (average cell diameter of Example 1)/(average cell diameter of Comparative Example 1) × 100

Average cell diameter index of Example 2
= (average cell diameter of Example 2)/(average cell diameter of Comparative Example 2) × 100

Average cell diameter index of Example 3
= (average cell diameter of Example 3)/(average cell diameter of Comparative Example 3) × 100

Average cell diameter index of Example 4
= (average cell diameter of Example 4)/(average cell diameter of Comparative Example 4) × 100

Average cell diameter index of Example 5
= (average cell diameter of Example 5)/(average cell diameter of Comparative Example 5) × 100

Average cell diameter index of Example 6
= (average cell diameter of Example 6)/(average cell diameter of Comparative Example 6) × 100

Average cell diameter index of each of Examples 7-1 to 7-5
= (average cell diameter of each of Examples 7-1 to 7-5)/(average cell diameter of Comparative Example 7) × 100

Average cell diameter index of Example 8
= (average cell diameter of Example 8)/(average cell diameter of Comparative Example 8) × 100

Average cell diameter index of Example 9
= (average cell diameter of Example 9)/(average cell diameter of Comparative Example 9) × 100

Average cell diameter index of Example 10
= (average cell diameter of Example 10)/(average cell diameter of Comparative Example 10) × 100

Average cell diameter index of each of Examples 11-1 to 11-5
= (average cell diameter of each of Examples 11-1 to 11-5)/(average cell diameter of Comparative Example 11) × 100

Average cell diameter index of Example 12 = (average cell diameter of Example 12)/(average cell diameter of Comparative Example 12) × 100

(4) Details of Each Component in Tables 6 to 8

*1: Sumikathene L-405 (MFR: 3.7 g/10 min (JIS K7210-1), density: 924 kg/$m^3$ (JIS K7112)), produced by Sumitomo Chemical Co., Ltd.
*2: dicumyl peroxide: Percumyl D (crosslinking agent), produced by NOF Corporation
*3: azodicarbonamide, median diameter: 19.5 um, surface-treated product
*4: azodicarbonamide, median diameter: 15.0 μm
*5: azodicarbonamide, median diameter: 5.0 μm
*6: sodium bicarbonate
*7: 3-methyl-5-pyrazolone

Table 6

| Table 6 | | | | | | | | |
|---|---|---|---|---|---|---|---|---|
| Component | Comp. Ex. 1 | Ex. 1 | Comp. Ex. 2 | Ex. 2 | Comp. Ex. 3 | Ex. 3 | Comp. Ex. 4 | Ex. 4 |
| Component (a): LDPE*1 | 100 | 100 | 100 | 100 | 100 | 100 | 100 | 100 |
| Component (d): DCP*2 | 0.7 | 0.7 | 0.7 | 0.7 | 0.7 | 0.7 | 0.7 | 0.7 |
| Component (b): Foaming agent A*3 | 17 | 17 | - | - | - | - | - | - |
| Component (b): Foaming agent B*4 | - | - | 17 | 17 | - | - | - | - |
| Component (b): Foaming agent C*5 | - | - | - | - | 17 | 17 | - | - |
| Component (b): Foaming agent D*6 | - | - | - | - | - | - | 17 | 17 |
| Component (c): compound A*7 | - | 1 | - | 1 | - | 1 | - | 1 |
| Expansion ratio index | 100 | 111 | 100 | 110 | 100 | 111 | 100 | 178 |
| Average cell diameter index | 100 | 71 | 100 | 83 | 100 | 77 | 100 | 80 |

Table 7

| Table 7 | | | | | | | | | | | | |
|---|---|---|---|---|---|---|---|---|---|---|---|---|
| Component | Comp. Ex. 5 | Ex. 5 | Comp. Ex. 6 | Ex. 6 | Comp. Ex. 7 | Ex. 7-1 | Ex. 7-2 | Ex. 7-3 | Ex. 7-4 | Ex. 7-5 | Comp. Ex. 8 | Ex. 8 |
| Component (a): LDPE*1 | 100 | 100 | 100 | 100 | 100 | 100 | 100 | 100 | 100 | 100 | 100 | 100 |
| Component (d): DCP*2 | 0.7 | 0.7 | 0.7 | 0.7 | 0.7 | 0.7 | 0.7 | 0.7 | 0.7 | 0.7 | 0.7 | 0.7 |
| Component (b): Foaming agent A*3 | 5 | 5 | 10 | 10 | 15 | 15 | 15 | 15 | 15 | 15 | 20 | 20 |
| Component (c): compound A*7 | - | 1 | - | 1 | - | 0.1 | 0.3 | 0.5 | 0.7 | 1 | - | 1 |
| Expansion ratio index | 100 | 104 | 100 | 114 | 100 | 100 | 101 | 101 | 108 | 111 | 100 | 111 |
| Average cell diameter index | 100 | 85 | 100 | 82 | 100 | 90 | 88 | 84 | 83 | 79 | 100 | 80 |

Table 8

| Table 8 | | | | | | | | | | | | |
|---|---|---|---|---|---|---|---|---|---|---|---|---|
| Component | Comp. Ex. 9 | Ex. 9 | Comp. Ex. 10 | Ex. 10 | Comp. Ex. 11 | Ex. 11-1 | Ex. 11-2 | Ex. 11-3 | Ex. 11-4 | Ex. 11-5 | Comp. Ex. 12 | Ex. 12 |
| Component (a): LDPE*1 | 100 | 100 | 100 | 100 | 100 | 100 | 100 | 100 | 100 | 100 | 100 | 100 |
| Component (d): DCP*2 | 0.7 | 0.7 | 0.7 | 0.7 | 0.7 | 0.7 | 0.7 | 0.7 | 0.7 | 0.7 | 0.7 | 0.7 |
| Component (b): Foaming agent D*6 | 5 | 5 | 10 | 10 | 15 | 15 | 15 | 15 | 15 | 15 | 20 | 20 |
| Component (c): compound A*7 | - | 1 | - | 1 | - | 0.1 | 0.3 | 0.5 | 0.7 | 1 | - | 1 |
| Expansion ratio index | 100 | 104 | 100 | 101 | 100 | 101 | 110 | 117 | 121 | 117 | 100 | 116 |
| Average cell diameter index | 100 | 52 | 100 | 51 | 100 | 78 | 78 | 64 | 59 | 56 | 100 | 56 |

Industrial Applicability

In the present invention, first, the expansion ratio improver for polymer materials and the foaming agent composition for polymer materials of the present invention comprise at least one member selected from the group consisting of a compound represented by formula (1) and a salt of the compound, whereby a foam having an excellent expansion ratio can be provided.

In the present invention, secondarily, the resin composition of the present invention comprises component (a): polyethylene, component (b): a chemical foaming agent, and component (c): a compound represented by formula (1) or a salt thereof, and the resin composition is foamed, whereby a foam having a high expansion ratio and fine (dense) cells can be obtained.

## Claims

1. An expansion ratio improver for a polymer material, comprising at least one member selected from the group consisting of a compound represented by the following formula (1) and a salt of the compound:

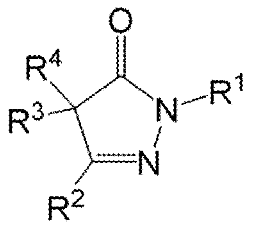

(1)

wherein in formula (1), $R^1$, $R^2$, $R^3$, and $R^4$ are the same or different and each represents a hydrogen atom, an alkyl group, an aralkyl group, or an aryl group; and each of these groups optionally has one or more substituents.

2. The expansion ratio improver for a polymer material according to claim 1, wherein the polymer material is rubber.

3. The expansion ratio improver for a polymer material according to claim 2, wherein the rubber is at least one member selected from the group consisting of diene rubber and non-diene rubber.

4. The expansion ratio improver for a polymer material according to claim 1, wherein the polymer material is a resin.

5. The expansion ratio improver for a polymer material according to claim 4, wherein the resin is at least one member selected from the group consisting of thermosetting resins and thermoplastic resins.

6. The expansion ratio improver for a polymer material according to any one of claims 1 to 5, wherein in the compound represented by formula (1), $R^1$, $R^3$, and $R^4$ are hydrogen atoms, and $R^2$ is a methyl group.

7. A foaming agent composition for a polymer material, comprising the expansion ratio improver for a polymer material according to any one of claims 1 to 6 and a chemical foaming agent.

8. The foaming agent composition for a polymer material according to claim 7, wherein the chemical foaming agent is at least one member selected from the group consisting of azodicarbonamide, N,N'-dinitrosopentanemethylenetetramine, p,p'-oxybisbenzenesulfonyl hydrazide, para-toluenesulfonyl hydrazide, p-toluenesulfonyl semicarbazide, diazoaminobenzene, hydrazodicarbonamide, barium azodicarboxylate, azobisisobutyronitrile, monosodium citrate, sodium bicarbonate, ammonium hydrogen carbonate, sodium carbonate, ammonium carbonate, aluminum acetate, ammonium nitrite, and sodium borohydride.

9. A resin composition comprising:

    component (a): polyethylene,
    component (b): a chemical foaming agent, and
    component (c): a compound represented by the following formula (1) or a salt thereof:

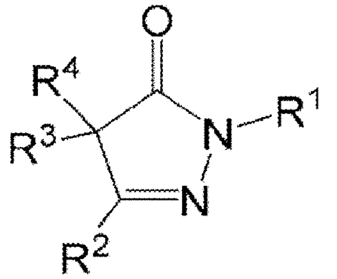

(1)

wherein $R^1$ represents a hydrogen atom, an alkyl group, or an aralkyl group; $R^2$, $R^3$, and $R^4$ are the same or different and each represents a hydrogen atom, an alkyl group, an aralkyl group, or an aryl group; and each of these groups optionally has one or more substituents,
the resin composition containing

0.1 parts by mass to 50 parts by mass of component (b) and
0.1 parts by mass to 50 parts by mass of component (c) based on 100 parts by mass of component (a).

**10.** The resin composition according to claim 9, wherein component (a) is low-density polyethylene (LDPE).

**11.** The resin composition according to claim 9 or 10,
wherein component (b) is an organic chemical foaming agent or an inorganic chemical foaming agent.

**12.** The resin composition according to claim 11, wherein the organic chemical foaming agent is an azo-based chemical foaming agent.

**13.** The resin composition according to claim 11, wherein the inorganic chemical foaming agent is sodium bicarbonate.

**14.** The resin composition according to any one of claims 9 to 13, wherein in the compound represented by formula (1) or a salt thereof, $R^1$, $R^3$, and $R^4$ are hydrogen atoms, and $R^2$ is a methyl group.

**15.** A foam foamed from the resin composition according to any one of claims 9 to 14.

**16.** A thermal insulation material, a curing material, a joint material, a gap-filling material, a covering material, a waterproof material, a sound insulator, a floater, a cushioning material, a shock absorbing material, a rug core material, or a toy, all of which are produced by using the resin composition according to any one of claims 9 to 14 or the foam according to claim 15.

## INTERNATIONAL SEARCH REPORT

International application No. **PCT/JP2021/047786**

**A. CLASSIFICATION OF SUBJECT MATTER**

***C08K 5/3445***(2006.01)i; ***C08L 21/00***(2006.01)i; ***C08L 23/06***(2006.01)i; ***C08L 101/00***(2006.01)i; ***C09K 3/00***(2006.01)i; ***C08J 9/04***(2006.01)i; ***C08J 9/06***(2006.01)i

FI: C09K3/00 111B; C08K5/3445; C08L21/00; C08L101/00; C08J9/04 105; C08L23/06; C08J9/04 CEZ; C08J9/06 CES

According to International Patent Classification (IPC) or to both national classification and IPC

**B. FIELDS SEARCHED**

Minimum documentation searched (classification system followed by classification symbols)

C08K5/3445; C08L21/00; C08L23/06; C08L101/00; C09K3/00; C08J9/04; C08J9/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | CN 109705489 A (ANHUDALLIP TECHNOLOGY CO., LTD.) 03 May 2019 (2019-05-03) claims, examples 1-5 | 1-16 |
| A | JP 2015-7145 A (DAINIPPON PRINTING CO LTD) 15 January 2015 (2015-01-15) claims, paragraphs [0030]-[0032], [0038]-[ ], examples | 1-16 |
| A | JP 2020-506999 A (HANGZHOU XINGLU TECHNOLOGIES CO., LTD.) 05 March 2020 (2020-03-05) claims, examples 1-23 | 1-16 |
| A | JP 2013-53178 A (SEKISUI CHEMICAL CO LTD) 21 March 2013 (2013-03-21) claims, examples 1, 2 | 1-16 |
| A | JP 2012-214624 A (SEKISUI CHEMICAL CO LTD) 08 November 2012 (2012-11-08) claims, example 1 | 1-16 |
| A | WO 2012/081561 A1 (SEKISUI CHEMICAL CO LTD) 21 June 2012 (2012-06-21) claims, examples 1-5 | 1-16 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 February 2022** | **15 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/047786**

| Patent document cited in search report | Publication date (day/month/year) | Patent family member(s) | Publication date (day/month/year) |
|---|---|---|---|
| CN 109705489 A | 03 May 2019 | (Family: none) | |
| JP 2015-7145 A | 15 January 2015 | (Family: none) | |
| JP 2020-506999 A | 05 March 2020 | US 2020/0123362 A1<br>claims, examples 1-23<br>WO 2018/130196 A1<br>CN 108299744 A | |
| JP 2013-53178 A | 21 March 2013 | (Family: none) | |
| JP 2012-214624 A | 08 November 2012 | (Family: none) | |
| WO 2012/081561 A1 | 21 June 2012 | US 2014/0004288 A1<br>claims, examples 1-5<br>CN 103314052 A<br>TW 201233723 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007246578 A
- JP S6144934 A
- JP 2000006730 A